# EUROPEAN PATENT SPECIFICATION

(11) **EP 2 147 832 B1**
(45) Date of publication and mention of the grant of the patent: **07.09.2011**
(21) Application number: 09002341.7
(22) Date of filing: 19.02.2009
(51) Int. Cl.: B60R 21/239, B60R 21/233

(54) **Airbag and airbag apparatus**
Airbag und Airbagvorrichtung
Airbag et appareil d'airbag

(30) Priority: 23.07.2008 JP 2008189977
(43) Date of publication of application: 27.01.2010
(73) Proprietor: Takata Corporation, Tokyo 106-8510 (JP)
(72) Inventor: Pausch, Tobias, Tokyo 106-8510 (JP)
(74) Representative: Banzer, Hans-Jörg

(56) References cited:
- EP-A- 1 757 495
- EP-A- 2 019 002
- WO-A-2008/136336
- JP-A- 2007 099 104
- JP-A- 2007 216 943

## Description

The present invention relates to an airbag provided with an open-and-close type vent hole and a gas discharge limitation member for limiting a discharge of the gas from the open-and-close type vent hole, and more specifically, it relates to an airbag constructed in such away that the open-and-close type vent hole is closed or opened by a small amount until an occupant is brought into contact with an occupant-facing surface of the expanded airbag, and the open-and-close type vent hole is opened or opened by a large amount when the occupant-facing surface of the expanded airbag is retreated by the occupant that is brought into contact therewith.

Incidentally, in the present invention, an occupant-direction refers to a direction where the occupant-facing surface of the airbag is directed to the occupant when the airbag is expanded, and an opposite-to-occupant direction refers to a direction opposite thereto.

### Background Art

A technology, in which a vent hole is provided in an airbag, and a vehicle occupant or the like is softly received by the airbag by means of discharging a gas outside the airbag from an inside of the airbag via the vent hole when the vehicle occupant or the like is brought into contact with the expanded airbag, is well known. EP 1757 495 describes an airbag according to the preamble of claim 1.

In the Japanese Unexamined Patent Application Publication No. 6-127330, an airbag constructed in such away that a vent hole is closed until an occupant is brought into contact with an occupant-facing surface of the expanded airbag, and the vent hole is opened when the occupant-facing surface is retreated by the occupant that is brought into contact with occupant-facing surface of the expanded airbag is described.

The airbag described in the same publication is formed into a bag-shape by means of stitching each of peripheral edge portions of an upper side base cloth and a lower side base cloth, which are respectively formed to have an approximately round shape. In the same publication, the upper base cloth constitutes the occupant-facing surface of the airbag. At a center of the lower side base cloth, a gas-flowing inlet where an inflator (gas generator) is inserted is provided. On an outer peripheral side of the lower side base cloth relative to the gas-flowing inlet, a vent hole is disposed.

In the lower side base cloth, a slit is provided in an area between the vent hole and the gas-flowing inlet, and a strap is inserted into the slit. One end of the strap disposed on the inside of the airbag is stitched to an airbag-inside surface of the upper side base cloth. Further, the other end of the strap disposed on an outside of the airbag is pulled around an outer peripheral side of the lower side base cloth in a manner so as to pass transversely across the vent hole from the slit, and is stitched onto the outer peripheral side of the lower side base cloth relative to the vent hole.

In the same publication, when the airbag is expanded, the strap gets tensed along the upper side base cloth and the lower side base cloth of the airbag that are separating from each other. At this moment, the aforementioned other end of the strap gets tensed along an outside surface of the airbag of the lower side base cloth, and is overlapped with the vent hole, and thereby the vent hole is closed. As a result, the gas from the vent hole is limited to be discharged, and pressure in the inside of the airbag rapidly becomes to high pressure. Consequently, the airbag is rapidly developed.

When the occupant is brought into contact with the upper side base cloth of the expanded airbag and retreats the upper side base cloth toward the inside of the airbag, the strap is loosened and the aforementioned other end of the strap is separated from the vent hole by gas pressure in the inside of the airbag. Thereby, the vent hole is opened and the gas is discharged from the vent hole toward the outside of the airbag. As a result, the occupant is softly received by the airbag.

### Disclosure of the Invention

### Problems to be Solved by the Invention

In the aforementioned Japanese Unexamined Patent Application Publication No. 6-127330, in a case that the occupant is brought into contact with the upper side base cloth of the expanded airbag, and the upper side base cloth is retreated toward the inside of the airbag, and the strap is thereby loosened, the aforementioned other end side of the strap is separated from the vent hole by means of the discharging gas pressure from the inside of the airbag toward the outside of the airbag while passing through the vent hole, and the vent hole is opened.

However, the gas discharged outside the airbag through the vent hole is immediately circumferentially diffused and therefore, the farther the strap is separated from the vent hole, the smaller the discharging gas pressure applied to the strap becomes. Accordingly, there is a possibility that the strap is not sufficiently separated from the vent hole and an opening amount of the vent hole becomes to be insufficient.

Accordingly, the object of the present invention is to provide an airbag capable of assuredly opening an open-and-close type vent hole by a predetermined opening amount, in an airbag provided with an open-and-close type vent hole and a gas discharge limitation member for limiting a discharge of the gas from the open-and-close type vent hole, and constructed in such a way that the open-and-close type vent hole is closed or opened by a small amount until an occupant is brought into contact with an occupant-facing surface of the airbag when expanded, and that the open-and-close type vent hole is opened or opened by a large amount when the occupant is brought into contact with the occupant-facing surface and the occupant-facing surface is retreated, and to provide an airbag apparatus provided with the airbag. Means for Solving the Problems

According to the invention, this object is achieved by an airbag as defined in claim 1. The dependent claims define preferred and advantageous embodiments of the invention.

### Advantages

In the airbag with respect to the present invention and the airbag apparatus with respect to the present invention provided with the airbag, when the airbag is expanded, the evagination portion moves toward the inside of the airbag in conjunction with the occupant-facing surface of the airbag developing toward the occupant direction. Therefore, the lid member is not moved by being pulled by means of the evagination portion, and the open-and-close type vent hole is closed or opened by a small amount by means of the lid member. Thereby, the gas is limited to be discharged from the open-and-close type vent hole, and the airbag is rapidly expanded.

When the occupant is brought into contact with the occupant-facing surface of the expanded airbag, and the occupant-facing surface is retreated toward the opposite-to-occupant direction, the evagination portion is evaginated toward the outside of the airbag in conjunction with the moving operation of the occupant-facing surface. Thereby, the lid member is moved by being pulled by means of the evagination portion, and the open-and-close type vent hole is opened or opened by a large amount, and the gas is discharged from the open-and-close type vent hole toward the outside of the airbag and the occupant is softly received.

At this moment, comparable gas pressure as that of the inner pressure of the airbag is constantly affected to the evagination portion toward the evaginating direction from the inside of the airbag. Therefore, since the lid member is strongly pulled by means of the evagination portion with comparable force as that of the inner pressure of the airbag, the lid member is assuredly moved up to the predetermined position, and thereby the open-and-close type vent hole is assuredly opened by the predetermined opening amount.

In the state that the approximately entire evagination portion is evaginated outside the airbag, it is preferable that the length in the evaginating direction of the evagination portion is formed to be larger than the moving distance where the lid member is moved from the position at which the lid member closes the open-and-close type vent hole or opens the open-and-close type vent hole by a small amount, to the position at which the lid member opens the open-and-close type vent hole or opens the open-and-close type vent hole by a large amount. In this case, as mentioned in the first embodiment, in the state that the approximately entire evagination portion is evaginated outside the airbag, the length in the evaginating direction of the evagination portion is formed to be larger than the moving distance where the lid member is moved from the position at which the lid member closes the open-and-close type vent hole or opens the open-and-close type vent hole by a small amount, to the position at which the lid member opens the open-and-close type vent hole or opens the open-and-close type vent hole by a large amount by 10mm to 300mm, and more preferably, by 40mm to 200mm.

In the thus constructed case, even when the occupant is brought into contact with the occupant-facing surface of the expanded airbag and the occupant-facing surface is retreated toward the opposite-to-occupant direction, and the lid member is pulled and moved by means of the evagination portion until the open-and-close type vent hole is opened or opened by a large amount in conjunction therewith, the evagination portion is not completely evaginated outside the airbag, and the tip end side thereof is still positioned in the inside of the airbag or in the inside of the base end side of the evagination portion. In a case that the construction is made in a manner as mentioned in the first embodiment, at this moment, the tip end side of the evagination portion remains in the inside of the airbag or in the inside of the base end side of the evagination portion across a length of, from 5mm to 150mm, and preferably, from 20mm to 100mm without being evaginated outside the airbag. Thereby, since the evagination portion continues to pull the lid member to try to be further evaginated outside the airbag even after the lid member is moved until the open-and-close type vent hole is opened or opened by a large amount, the lid member is assuredly held at a vent hole-open position.

By means of providing the tether for connecting the occupant-facing surface of the airbag and the tip end side in the evaginating direction of the evagination portion, the interlocking member for interlocking the moving operation of the occupant-facing surface and the moving operation of the evagination portion can be simply constructed.

By means of integrally constructing the lid member and the tether, the number of members constituting the airbag can be reduced and a manufacture work for the airbag can be simplified.

According to the invention, the halfway portion in the longitudinal direction of the tether is overlapped with the open-and-close type vent hole, and by means of constructing the halfway portion to serve as the lid member, the construction of the airbag can be simplified.

According to the invention mentioned above, the lid member is coupled with the halfway portion in the longitudinal direction of the tether, and the lid member is constructed to be moved by being pulled by means of the evagination portion via the tether. Further, as described above, the lid member is coupled with the tip end side of the evagination portion via the coupling portion, and the lid member may be constructed to be moved by being pulled by means of the evagination portion via the coupling portion.

By means of providing the openings in plurality while displacing the respective positions in the moving direction of the lid member, the opening amount of the open-and-close type vent hole can be constructed to be varied corresponding to a moving amount of the lid member.

Since the lid member is combined with the airbag in the state of covering the open-and-close type vent hole until the lid member is pulled by the evagination portion with the predetermined tension force or more, the open-and-close type vent hole can be assuredly closed or opened by a small amount at the initial stage of the expanding operation of the airbag.

By means of providing the tether for connecting the occupant-facing surface of the airbag and the tip end side in the evaginating direction of the evagination portion, the interlocking member for interlocking the moving operation of the occupant-facing surface and the moving operation of the evagination portion can be simply constructed.

### Brief Description of the Drawings

Fig. 1 is a side elevation illustrating an airbag and an airbag apparatus according to an embodiment.
Fig. 2 is a cross-sectional view taken along a line II-II in Fig. 1.
Fig. 3 is a side elevation illustrating the airbag and the airbag apparatus of Fig. 1.
Fig. 4 is a cross-sectional view taken along a line IV-IV in Fig. 3.
Fig. 5(a) and Fig. 5(b) are perspective views illustrating a part VA in Fig. 2 and a part VB in Fig. 4, respectively.
Fig. 6 is a side elevation illustrating the airbag and the airbag apparatus according to another embodiment, which does not belong to the invention.
Fig. 7 is a cross-sectional view taken along a line VII-VII in Fig. 6.
Fig. 8 is a side elevation illustrating the airbag and the airbag apparatus of Fig. 6.
Fig. 9 is a cross-sectional view taken along a ling IX-IX in Fig. 8.
Fig. 10 is a side elevation illustrating the vicinity of an open-and-close type vent hole of the airbag according to the embodiment.
Fig. 11 is a cross-sectional view taken along a line XI-XI in Fig. 10.
Fig. 12 is a cross-sectional view of the same part as that in Fig. 11 illustrating an opening operation of the open-and-close type vent hole.
Fig. 13 is a cross-sectional view of the same part as that in Fig. 11 illustrating the opening operation of the open-and-close type vent hole.
Fig. 14 is a cross-sectional view of the same part as that in Fig. 11 illustrating the opening operation of the open-and-close type vent hole.
Fig. 15 is a side elevation illustrating the airbag and the airbag apparatus according to the embodiment, which does not belong to the invention.
Fig. 16 is a cross-sectional view taken along a line XVI-XVI in Fig. 15.
Fig. 17 is a side elevation illustrating a part XVII in Fig. 16.
Fig. 18 is a cross-sectional view taken along a line XVIII-XVIII in Fig. 17.
Fig. 19 is a side elevation illustrating the airbag and the airbag apparatus of Fig. 15.
Fig. 20 is a cross-sectional view taken along a line XX-XX in Fig. 19.
Fig. 21 is a side elevation illustrating a part XXI in Fig. 20.
Fig. 22 is a cross-sectional view taken along a line XXII-XXII in Fig. 21.
Fig. 23 is a side elevation illustrating the airbag and the airbag apparatus according to the embodiment, which does not belong to the invention.
Fig. 24 is a cross-sectional view taken along a line XXIV-XXIV in Fig. 23.
Fig. 25 is a cross-sectional perspective view taken along a line XXV-XXV in Fig. 24.
Fig. 26 is a side elevation illustrating the airbag and the airbag apparatus of Fig. 23.
Fig. 27 is a cross-sectional view taken along a line XXVII-XXVII in Fig. 26.
Fig. 28 is a cross-sectional perspective view taken along a line XXVIII-XXVIII in Fig. 24.
Fig. 29 is a cross-sectional view illustrating the airbag and the airbag apparatus according to the embodiment.
Fig. 30 is a cross-sectional view illustrating the airbag and the airbag apparatus of Fig. 29.
Fig. 31 is a horizontal cross-sectional view illustrating the airbag and the airbag apparatus according to still another embodiment.
Fig. 32 is a horizontal cross-sectional view illustrating the airbag and the airbag apparatus of Fig. 31.
Fig. 33(a) and Fig. 33(b) are enlarged views illustrating a part XXXIIIA of Fig. 31 and a part XXXIIIB of Fig. 32, respectively.
Fig. 34 is a cross-sectional view illustrating the airbag and the airbag apparatus according to another embodiment, which does not belong to the invention.
Fig. 35 is a cross-sectional view taken along a line XXXV-XXXV in Fig. 34.
Fig. 36 is a side elevation illustrating the airbag and the airbag apparatus of Fig. 34.
Fig. 37 is a cross-sectional view taken along a line XXXVI-XXXVI in Fig. 35.
Fig. 38(a) and Fig. 38(b) are enlarged views illustrating a part XXXVIIIA of Fig. 35 and a part XXXVIIIB of Fig. 37, respectively.

### Best Mode for Carrying Out the Invention

Hereinbelow, an embodiment of the present invention will be explained with reference to the drawings.

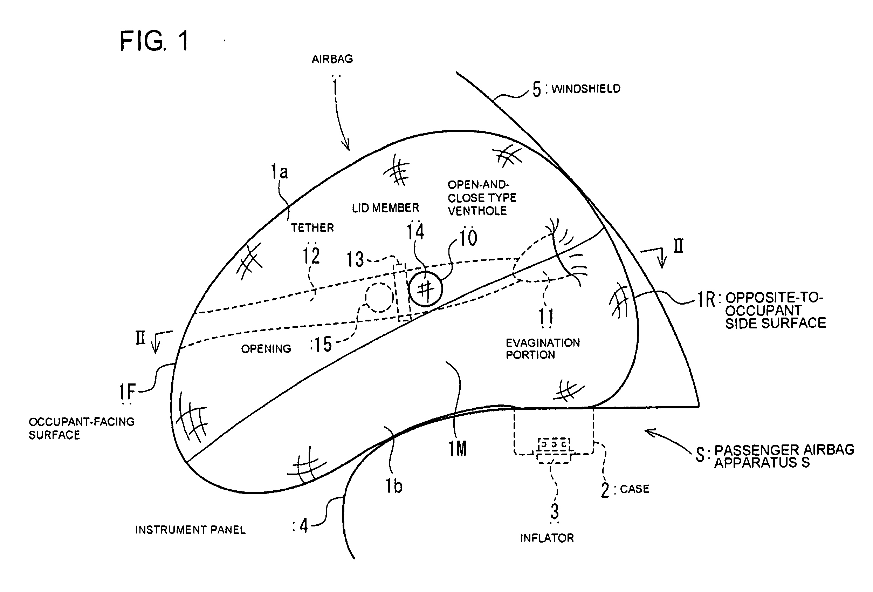

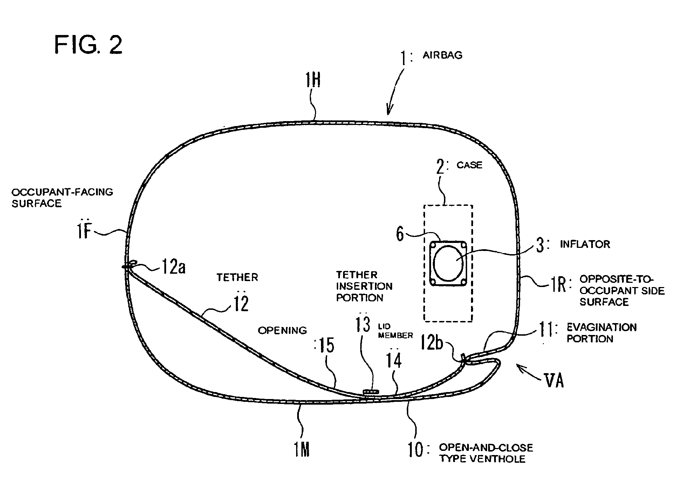

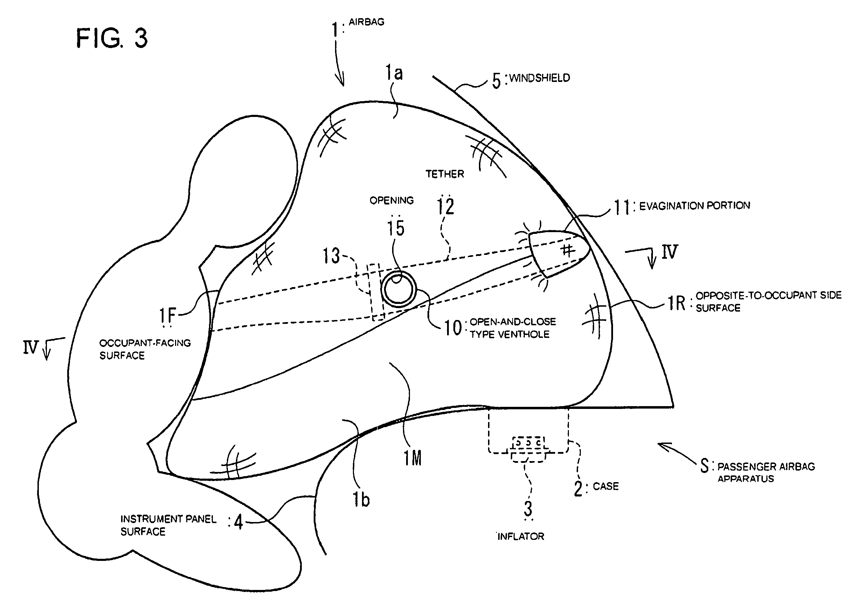

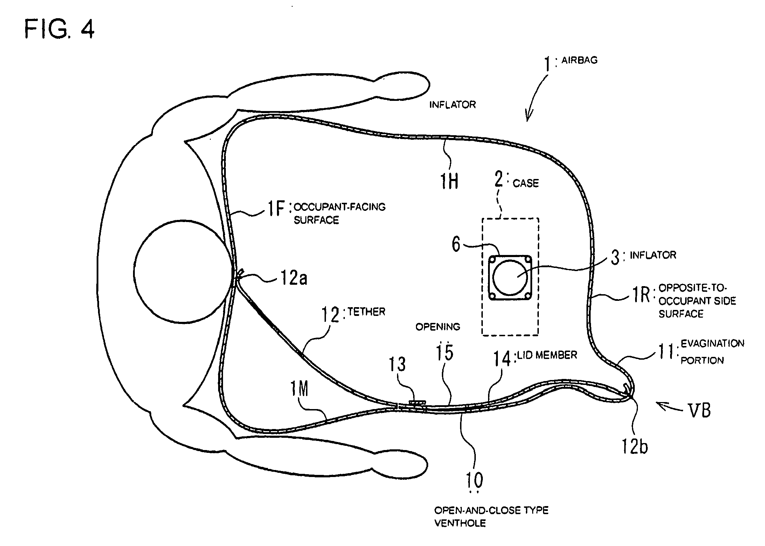

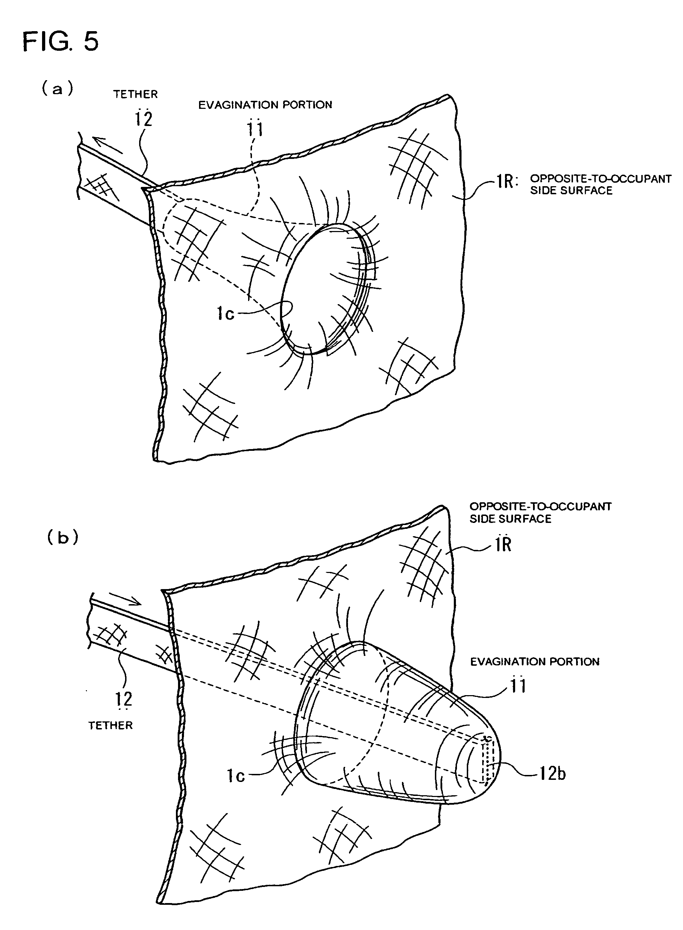

Fig. 1 is a side elevation illustrating an airbag and an airbag apparatus according to an embodiment, Fig. 2 is a cross-sectional view (approximately horizontal cross-sectional view) taken along a line II-II in Fig. 1, Fig. 3 is a side elevation illustrating the airbag and the airbag apparatus of Fig. 1, Fig. 4 is a cross-sectional view (approximately horizontal cross-sectional view) taken along a line IV-IV in Fig. 3, and Fig. 5(a) and Fig. 5(b) are perspective views illustrating a part VA in Fig. 2 and a part VB in Fig. 4 (in the vicinity of the evagination portion), respectively. Incidentally, Figs. 1 and 2 illustrate a state before the occupant is brought into contact with the expanded airbag, and Figs. 3 and 4 illustrate a state after the occupant is brought into contact with the expanded airbag. Fig. 5(a) illustrates a state in which the evagination portion is pulled into the airbag, and Fig. 5(b) illustrates a state in which the evagination portion is evaginated outside the airbag.

In the below explanation, a left and right direction is a vehicle width direction and is in conformity with a left and right direction looking from an occupant seated in a passenger seat.

In this embodiment, an airbag 1 refers to a passenger airbag of a vehicle.

A passenger airbag apparatus S is provided with the airbag 1, a case 2, an inflator 3, or the like. The airbag 1 is housed in the case 2 upon being folded back, and is expanded by the inflator 3. The case 2 is a container whose upper surface is opened, and the upper surface thereof is covered with a lid (illustration is omitted). The passenger airbag apparatus S is installed in an upper surface portion of an instrument panel 4 of an automobile. Above the instrument panel 4, a windshield 5 exists. Incidentally, the lid may be a part of the instrument panel 4 or may be a plate in a separate body from the instrument panel 4.

As illustrated in Fig. 1, the airbag 1 is expanded upward from the upper surface of the instrument panel 4 in a manner so as to infill a space between the instrument panel 4 and the windshield 5 by means of a gas supplied from the aforementioned inflator, and a rear side of the airbag 1 in a front and rear direction of a vehicle body is expanded and developed toward the rear side of the vehicle body, namely an occupant seated in the passenger seat. A surface of the expanded airbag 1 facing the rear side of the vehicle body is an occupant-facing surface 1F and a surface facing a front side of the vehicle body is an opposite-to-occupant side surface 1R. In a state that the airbag 1 is expanded, a lower portion of the occupant-facing surface 1F faces in the vicinity of a waist portion of the occupant seated in the passenger seat.

In this embodiment, the airbag 1 is an airbag formed into a bag shape by means of combining each of peripheral edge portions of an upper panel 1a constituting an upper surface side, and a lower panel 1b constituting a lower surface side at an expanded time of the airbag 1, by means of a stitching work or the like. An opening for use in an inflator (illustration is omitted) is provided in the vicinity of a front end of the lower panel 1b, and the aforementioned inflator 3 is disposed in the airbag 1 through the opening for use in an inflator, and a peripheral edge portion of the opening for use in an inflator is fixed to the case 2 by means of a pressing ring 6 (refer to Figs. 2 and 4).

The airbag 1 is provided with an open-and-close type vent hole 10 for discharging the gas from the inside of the airbag 1 to the outside of the airbag 1, an evagination portion 11 provided in the opposite-to-occupant side surface 1R of the airbag 1, which is allowed to be evaginated from the airbag 1 toward the outside by means of gas-pressure in the airbag 1, and a tether 12 serving as an interlocking member for connecting the occupant-facing surface 1F of the airbag 1 and a tip end side in an evaginating direction of the evagination portion 11 passing through the inside of the airbag 1, and so forth. In this embodiment, a part of the tether 12 constitutes a lid member for covering the open-and-close type vent hole 10. A construction of the tether 12 will be described later in detail.

As illustrated in Figs. 2 and 4, in this embodiment, the open-and-close type vent hole 10 is provided in a right side surface 1M at a time when the airbag 1 is expanded. Further, the evagination portion 11 is provided in the vicinity of a corner portion of the opposite-to-occupant side surface 1R and the right side surface 1M at the time when the airbag 1 is expanded. The open-and-close type vent hole 10 and the evagination portion 11 are respectively disposed in a manner so as to be positioned in the vicinity of a middle portion in an upper and lower direction of the right side surface 1M and the opposite-to-occupant side surface 1R in a state that the airbag 1 is expanded. Incidentally, the disposition of the open-and-close type vent hole 10 and the evagination portion 11 is not limited to the description above. Furthermore, in this embodiment, although the open-and-close type vent hole 10 is configured to form a round opening, the shape of the opening of the open-and-close type vent hole 10 is not limited thereto.

The evagination portion 11 is disposed at a position in the expanded airbag 1 where the evagination portion 11 is not brought into contact with an interior member in the vehicle room, such as the windshield 5, the instrument panel 4, and so forth even when the evagination portion 11 is evaginated outside the airbag 1.

The evagination portion 11 is constructed by forming a base cloth into approximately a dome shape or a bag shape. In this embodiment, the evagination portion 11 is formed of a base cloth in a separate body from the aforementioned upper panel 1a and the lower panel 1b. In this embodiment, an opening 1c for attaching an evagination portion (refer to Figs. 5(a) and (b)) is provided in the opposite-to-occupant side surface 1R of the airbag 1, and a peripheral edge portion of the evagination portion 11 is combined with a peripheral edge portion of the opening 1c by means of the stitching work (illustration is omitted), or the like. Incidentally, a construction of the evagination portion 11 is not limited thereto. For example, the base cloth constituting the evagination portion 11 may be integrally provided in at least one of the aforementioned upper panel 1a and the lower panel 1b.

As illustrated in Figs. 3 and 4, in a state that an approximately entire evagination portion 11 is evaginated outside the airbag 1, a length in the evaginating direction of the evagination portion 11, namely a distance from a base end side in the evaginating direction of the evagination portion 11 to a tip end side thereof is preferably from 20mm to 150mm, and specifically, from 50mm to 100mm.

One end (hereinbelow referred to as base end) side of the tether 12 is combined with an airbag-inside surface of the occupant-facing surface 1F by means of the stitching work or the like, and the other end (hereinbelow referred to as tip end) side thereof is combined with the airbag-inside surface of a tip end portion in the evaginating direction of the evagination portion 11 by means of the stitching work or the like. Reference numerals 12a and 12b denote seams where both end sides of the tether 12 are respectively stitched to the occupant-facing surface 1F and the evagination portion 11. Incidentally, a combining method for combining both end sides of the tether 12 with the occupant-facing surface 1F and the evagination portion 11 is not limited to the stitching work.

A combining position of the base end side of the tether 12 with the occupant-facing surface 1F is located in the vicinity of a center in the left and right direction of the occupant-facing surface 1F, and at a height allowed to face the vicinity of a chest portion of the occupant seated in the passenger seat in a state that the airbag 1 is expanded.

When the airbag 1 is expanded, as illustrated in Figs. 1 and 2, along with an expanding out operation of the occupant-facing surface 1F of the airbag 1 in a direction toward the occupant, a tip end side of the evagination portion 11 is pulled into the airbag 1 by being pulled in the direction toward the occupant by the occupant-facing surface 1F via the tether 12. In this embodiment, a length of the tether 12 is, as illustrated in Figs. 1 and 2, at a time when an expanding operation of the airbag 1 is completed, formed into a dimension where the approximately entire evagination portion 11 is pulled into the airbag 1 via the tether 12.

As illustrated in Figs. 3 and 4, when the occupant-facing surface 1F of the expanded airbag 1 is retreated toward an opposite-to-occupant direction by being pressed by the occupant, the evagination portion 11 is also allowed to move in the opposite-to-occupant direction by just that much via the tether 12, and the evagination portion 11 is brought to be evaginated outside the airbag 1 by means of the gas-pressure in the airbag 1.

In this embodiment, the tether 12 is constructed with a belt-shaped base cloth and is disposed in such a way that a width direction thereof corresponds to an approximately upper and lower direction in the airbag 1.

In this embodiment, a tether insertion portion 13 is provided in the vicinity of the open-and-close type vent hole 10 in the right side surface 1M of the airbag 1. As illustrated in Fig. 1, the tether insertion portion 13 is disposed on a side of the occupant-facing surface 1F relative to the open-and-close type vent hole 10, and at an approximately the same height as that of the open-and-close type vent hole 10 in a state that the airbag 1 is expanded.

In this embodiment, the tether insertion hole 13 is formed with a small cloth having an approximately rectangular shape. This small cloth is overlapped with the airbag-inside surface of the aforementioned right side surface 1M in such a way that the longitudinal direction thereof corresponds to an approximately upper and lower direction, and both end sides of the longitudinal direction thereof is combined with the right side surface 1M by means of the stitching work (illustration is omitted) or the like. A halfway portion of the tether 12 is inserted into the tether insertion portion 13, namely a space between the small cloth and the airbag-inside surface of the right side surface 1M, in such a way that the halfway portion is able to be slid in a front and rear direction.

Incidentally, the construction of the tether insertion portion 13 is not limited to the above-described. For example, although not shown, a pair of slits serving as a tether insertion portion, extending in parallel with each other may be provided in the right side surface 1M of the airbag 1, and the tether 12 may be passed through from one slit to the other slit. It is also natural to form the construction other than the above-described.

As illustrated in Figs. 1 and 2, in the tether 12, a portion on the evagination portion 11 side relative to the tether insertion portion 13 extends while passing transversely across the open-and-close type vent hole 10, and the halfway portion of the tether 12 faces the open-and-close type vent hole 10 from the inside of the airbag 1. When the airbag 1 is expanded, the halfway portion of the tether 12 is pressed to the airbag-inside surface of the aforementioned right side surface 1M by the gas pressure in the airbag 1, and close the open-and-close type vent hole 10. That is, in this embodiment, the halfway portion of the tether 12 constitutes the lid member for covering the open-and-close type vent hole 10 at the time when the airbag 1 is expanded. Hereinbelow, a portion in the tether 12, which faces the open-and-close type vent hole 10 when the airbag 1 is expanded, and becomes to a state where the approximately entire evagination portion 11 is pulled into the airbag 1 by means of the tether 12, as illustrated in Figs. 1 and 2, refers to as a lid member 14.

In this embodiment, a width of the halfway portion of the tether 12 including the lid member 14 is formed to be larger than an inner diameter of the open-and-close type vent hole 10. Therefore, in this embodiment, the construction is made such that when the lid member 14 is overlapped with the open-and-close type vent hole 10, the entire open-and-close type vent hole 10 is covered with the lid member 14, and the open-and-close type vent hole 10 is brought to a state to be completely closed. However, the construction may be made such that a width of the lid member 14 is formed to be smaller than the inner diameter of the open-and-close type vent hole 10, and even when the lid member 14 is overlapped with the open-and-close type vent hole 10, the open-and-close type vent hole 10 is brought to a state to be partially opened.

In this embodiment, on the side of the occupant-facing surface 1F relative to the lid member 14 of the tether 12, an opening 15 overlapping with the open-and-close type vent hole 10 when the tether 12 moves to the evagination portion 11 is formed. In this embodiment, the opening 15 is formed of a round opening having an approximately the same size as that of the open-and-close type vent hole 10. The opening 15 is disposed to be allowed to be overlapped in approximately concentric manner with the open-and-close type vent hole 10 when the approximately entire evagination portion 11 is evaginated outward from the airbag 1 and the tether 12 is fully moved to the evagination portion 11 side therealong, as illustrated in Figs. 3 and 4. Incidentally, the shape, the number, and the disposition of the opening 15 are not limited thereto.

In this embodiment, when the airbag 1 is folded back, the approximately entire evagination portion 11 is previously intruded into the airbag 1, and the airbag 1 is folded back in a state where the tether 12 is moved to the side of the occupant-facing surface 1F and the lid member 14 covers the open-and-close type vent hole 10. Incidentally, the folding-back method of the airbag 1 is optional and is not limited to a specific folding-back method.

An operation of the passenger airbag apparatus S provided with the thus constructed airbag 1 is as follows.

At a time when the vehicle on which the passenger airbag apparatus S is mounted encounters a collision or the like, the inflator 3 is activated to blow out the gas, and the airbag 1 starts to be expanded by means of the gas from the inflator 3. The airbag 1 pushes open the aforementioned lid and is expanded and developed from the upper surface of the instrument panel 4 to the occupant seated in the passenger seat.

In this embodiment, since the airbag 1 is folded back in a state where the lid member 14 previously covers the open-and-close type vent hole 10, the airbag 1 is in a state that the open-and-close type vent hole 10 is closed by the lid member 14 from an initial stage of the expanding operation of the airbag 1, and the gas is limited to be discharged from the open-and-close type vent hole 10. Thereby, the airbag 1 is rapidly expanded.

The occupant-facing surface 1F is developed toward the side of the occupant seated in the passenger seat along with the expanding operation of the airbag 1, and thereby the tether 12 is pulled toward the side of the occupant seated in the passenger seat and the evagination portion 11 is blocked to be evaginated outside the airbag 1. Thereby, as illustrated in Figs. 1 and 2, until the occupant seated in the passenger seat is brought into contact with the occupant-facing surface 1F of the expanded airbag 1, the open-and-close type vent hole 10 is kept closed by means of the lid member 14 and the inside of the airbag 1 is kept at high inner pressure.

As illustrated in Figs. 3 and 4, when the occupant seated in the passenger seat is brought into contact with the occupant-facing surface 1F of the expanded airbag 1, and the occupant-facing surface 1F is retreated by being pressed by means of the occupant seated in the passenger seat, the evagination portion 11 is allowed to be evaginated toward an opposite-to-occupant side by just that much, and the evagination portion 11 is evaginated outside the airbag 1 by means of the gas pressure in the airbag 1. Since the tether 12 is moved toward the evagination portion 11 side by being pulled by means of the evagination portion 11 along with the evaginating operation of the evagination portion 11, the opening 15 becomes to be overlapped with the open-and-close type vent hole 10. Thereby, the gas becomes to be discharged outside the airbag 1 through the opening 15 and the open-and-close type vent hole 10, and the occupant seated in the passenger seat is softly received by means of the airbag 1.

In the airbag 1, the comparable gas pressure as that of the inner pressure of the airbag 1 is constantly affected to the evagination portion 11 from the inside of the airbag 1 to the outside of the airbag 1. Therefore, until the evaginating operation of the evagination portion 11 is completed, the tether 12 is strongly pulled to the evagination portion 11 side by means of the evagination portion 11 with the comparable force as that of the inner pressure of the airbag 1. Thereby, the tether 12 is assuredly moved up to a predetermined position by being pulled by means of the evagination portion 11, and the open-and-close type vent hole 10 becomes to be assuredly opened by a predetermined opening amount.

In this embodiment, the opening 15 becomes to be overlapped with the open-and-close type vent hole 10 along with a moving operation of the tether 12 to the evagination portion 11 side. At this moment, the larger the moving distance of the tether 12 to the evagination portion 11 side, namely a retreating amount of the occupant-facing surface 1F is, the larger the square measure of the opening 15, which is overlapped with the open-and-close type vent hole 10, becomes. Thereby, a discharge amount of the gas from the open-and-close type vent hole 10, namely an impact-absorbing amount can be changed corresponding to the physical size of the occupant, a speed of the vehicle in collision, or the like.

Incidentally, in a case that the airbag 1 is expanded in a state of an out-of-position where the occupant seated in the passenger seat is seated at a position situated nearer a front side in relation to the regular seating position, the occupant seated in the passenger seat is brought into contact with the occupant-facing surface 1F at a stage before the expanding operation of the airbag 1 is completed, and the occupant-facing surface 1F is stopped to be moved to the occupant side further, and thereby the evagination portion 11 is allowed to be evaginated outside the airbag 1, and the open-and-close type vent hole 10 is opened by means of the same operation as described above.

In this embodiment, since the tether 12 is integrally provided with the lid member 14, the number of members constituting the airbag 1 can be reduced and a manufacture work for the airbag 1 is simplified.

Further, in this embodiment, since the halfway portion in a longitudinal direction of the tether 12 is overlapped with the open-and-close type vent hole 10, and the halfway portion serves as the lid member 14, a construction of the airbag 1 is simple.

Incidentally, in this embodiment, although the open-and-close type vent hole 10 is provided in the right side surface 1M of the airbag 1, the open-and-close type vent hole 10 may be provided in a left side surface 1H of the airbag 1. Alternatively, the open-and-close type vent holes 10 may also be respectively provided in both of the left and right side surfaces 1M and 1H of the airbag 1. Other than the open-and-close type vent hole 10, a constant open type vent hole, which is not opened and closed by means of the lid member 14, may also be provided. In this case, at a portion in the lid member 14, which is overlapped with the open-and-close type vent hole 10, an opening having a smaller diameter than that of the open-and-close type vent hole 10 may be formed to serve as the constant open type vent hole. In this embodiment, although the evagination portion 11 is provided one in number, two or more evagination portions 11 may be provided. In this embodiment, although the evagination portion 11 is provided in the opposite-to-occupant side surface 1R of the airbag 1, and is configured to be evaginated toward the front side of the vehicle body, the disposition and the evaginating direction of the evagination portion 11 is not limited thereto. For example, the evagination portion 11 may be provided in a side surface of the airbag 1, and configured to be evaginated toward a lateral side of the airbag 1. The same is true for the below described each of the embodiments.

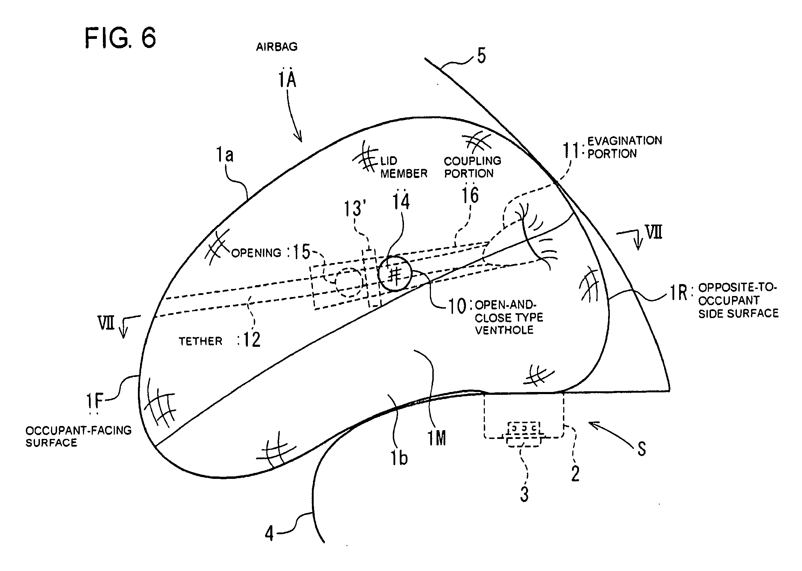

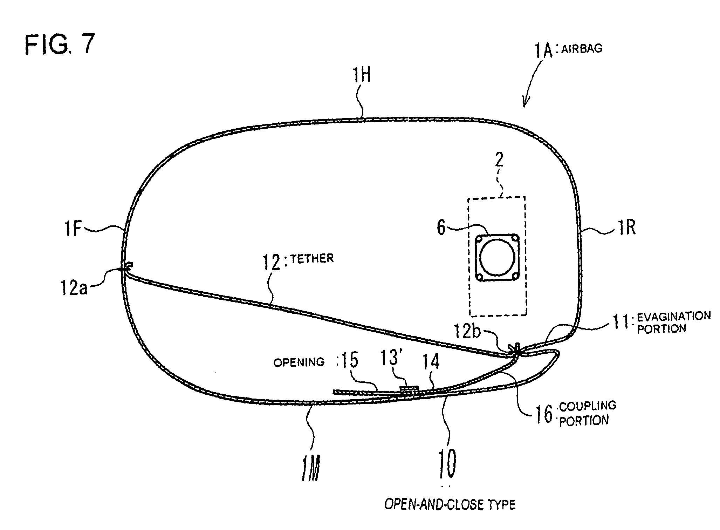

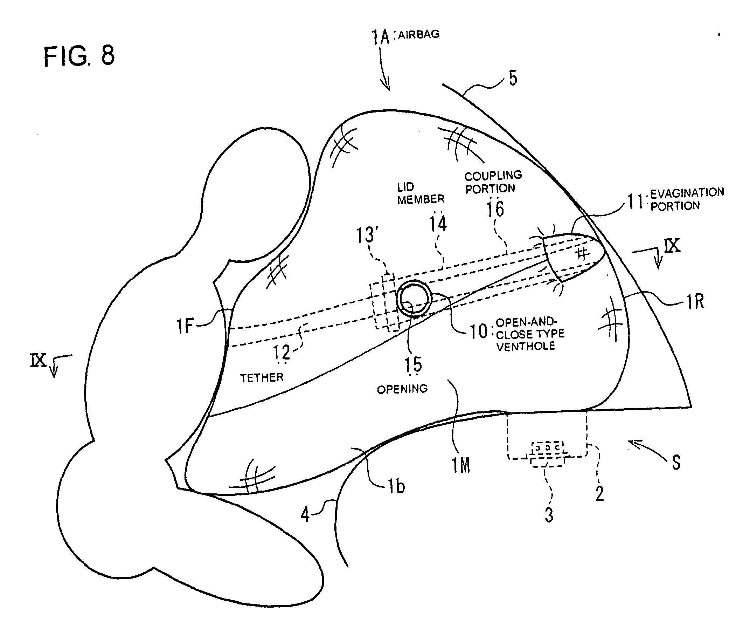

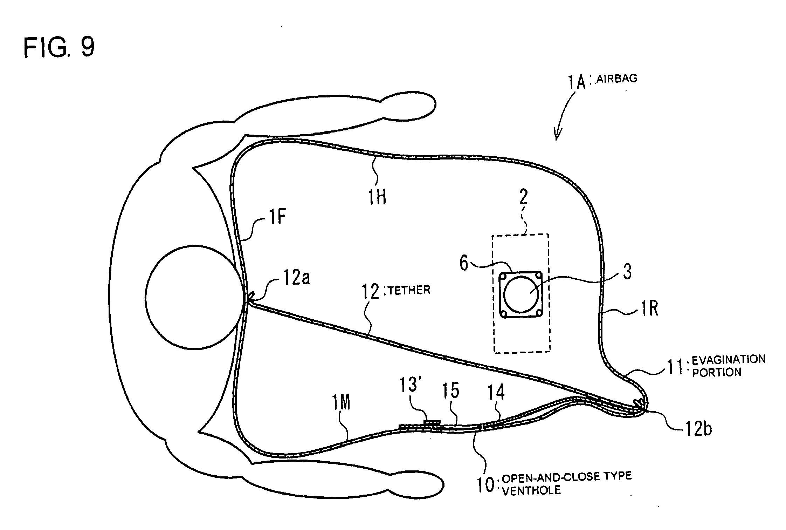

Fig. 6 is a side elevation illustrating the airbag and the airbag apparatus according to another embodiment, Fig. 7 is a cross-sectional view (approximately horizontal cross-sectional view) taken along a line VII-VII in Fig. 6, Fig. 8 is a side elevation illustrating the airbag and the airbag apparatus of Fig. 6, and Fig. 9 is a cross-sectional view (approximately horizontal cross-sectional view) taken along a ling IX-IX in Fig. 8. Incidentally, Figs. 6 and 7 illustrate a state before the occupant is brought into contact with the expanded airbag, and Figs. 8 and 9 illustrate a state after the occupant is brought into contact with the expanded airbag.

In an airbag 1A according to the embodiment, the lid member 14 for covering the open-and-close type vent hole 10 is provided in a separate body from the tether 12 serving as the interlocking member for connecting the occupant-facing surface 1F of the airbag 1A and a tip end side in the evaginating direction of the evagination portion 11.

In this embodiment, the lid member 14 is constructed with a belt-shaped base cloth in a separate body from the tether 12. The lid member 14 covers the open-and-close type vent hole 10 from an inside of the airbag 1A. The lid member 14 is disposed while passing transversely across the open-and-close type vent hole 10 in an approximately front and rear direction along the airbag-inside surface of the right side surface 1M of the airbag 1A, and the halfway portion in a longitudinal direction thereof is overlapped with the open-and-close type vent hole 10. In this embodiment, the width of the lid member 14 is also larger than the inner diameter of the open-and-close type vent hole 10, and in a state that the lid member 14 is overlapped with open-and-close type vent hole 10, the open-and-close type vent hole 10 is completely closed by means of the lid member 14. However, in a similar manner as that of the above-described embodiment, the width of the lid member 14 may be smaller than the diameter of the open-and-close type vent hole 10.

In this embodiment, a lid member insertion portion 13' is provided in the vicinity portion of the open-and-close type vent hole 10 in the right side surface 1M of the airbag 1A. As illustrated in Fig. 6, the lid member insertion portion 13' is disposed on the side of the occupant-facing surface 1F relative to the open-and-close type vent hole 10, and at an approximately the same height as that of the open-and-close type vent hole 10 in a state where the airbag 1A is expanded. The lid member 14 on the side of the occupant-facing surface 1F (hereinbelow referred to as rear end side) relative to the open-and-close type vent hole 10 is slidably inserted in a front and rear direction into the lid member insertion portion 13'. Incidentally, the lid member insertion portion 13' has the same construction as that of the tether insertion portion 13 in the above-described embodiment, except that the lid member 14 that is a separate body from the tether 12 is inserted into the lid member insertion portion 13' instead of the tether 12.

In this embodiment, the tether 12 is stretched between the occupant-facing surface 1F and the tip end side in the evaginating direction of the evagination portion 11 in the airbag 1A without inserting the halfway portion of the tether 12 into the tether insertion portion 13.

In this embodiment, a belt-shaped coupling portion 16 continues into the side of the opposite-to-occupant side surface 1R (hereinbelow referred to as tip end side) of the lid member 14. The tip end side of the coupling portion 16 is combined with the airbag-inside surface of the tip end side in the evaginating direction of the evagination portion 11. Incidentally, as illustrated in Fig. 2, in this embodiment, the tip end side of the coupling portion 16 is overlapped with a tip end side of the tether 12 and is integrally stitched to the evagination portion 11 with the tether 12 by a seam 12b. However, the combining method for combining the coupling portion 16 with the evagination portion 11 is not limited to the above-described.

In this embodiment, although the lid member 14 and the coupling portion 16 are integrally formed by means of a common base cloth, the lid member 14 and the coupling portion 16 may be formed in a separate body, and a rear end side of the coupling portion 16 may be combined with the lid member 14 by means of the stitching work or the like.

In this embodiment, in a case that the evagination portion 11 is evaginated outside the airbag 1A, the lid member 14 is pulled by the evagination portion 11 via the coupling portion 16, and is moved to the evagination portion 11 side.

Length of the coupling portion 16 is formed to have a dimension such as that at a time when the airbag 1A is expanded, and in a state that the approximately entire evagination portion 11 is pulled into the inside of the airbag 1A by means of the tether 12, the coupling portion 16 is tensed (tightly stretched) between the tip end side of the evagination portion 11 and the lid member 14, as illustrated in Figs. 6 and 7.

In this embodiment, the opening 15 that is overlapped with the open-and-close type vent hole 10 when the lid member 14 is moved to the evagination portion 11 side is also formed at a rear end side of the lid member 14. In this embodiment, the opening 15 is also formed of a round opening at approximately the same size as that of the open-and-close type vent hole 10. Further, the opening 15 is disposed in such a way that the opening 15 can be approximately concentrically overlapped with the open-and-close type vent hole 10 when the approximately entire evagination portion 11 is evaginated outside the airbag 1A, and the lid member 14 is fully moved to the evagination portion 11 side along the evaginating operation, as illustrated in Figs. 8 and 9.

In this embodiment, when the airbag 1A is folded back, the approximately entire evagination portion 11 is also previously intruded into the airbag 1A, and the airbag 1A is folded back in a state where the lid member 14 covers the open-and-close type vent hole 10.

The construction of the airbag 1A other than the above-described is the same as that of the above-described airbag 1 in Figs. 1 through 5, and the same reference numerals as that in Figs. 1 through 5 used in Figs. 6 through 9 denote the same elements.

An operation of the passenger airbag apparatus S provided with the airbag 1A is as follows.

At a time when the vehicle where the passenger airbag apparatus S is mounted encounters a collision, or the like, the inflator 3 is activated to blow out the gas and the airbag 1A starts to be expanded by means of the gas from the inflator 3. The airbag 1A pushes open the lid and is expanded and developed toward the occupant seated in the passenger seat from an upper surface of the instrument panel 4.

In this embodiment, the open-and-close type vent hole 10 is also closed by the lid member 14 from a time the airbag 1A starts to be expanded, and the gas is limited to be discharged from the open-and-close type vent hole 10. Thereby, the airbag 1 is rapidly expanded.

The occupant-facing surface 1F is developed toward the side of the occupant seated in the passenger seat along with an expanding operation of the airbag 1A, and thereby the tether 12 is pulled toward the side of the occupant seated in the passenger seat and the evagination portion 11 is blocked to be evaginated outside the airbag 1A. Thereby, as illustrated in Figs. 6 and 7, until the occupant seated in the passenger seat is brought into contact with the occupant-facing surface 1F of the expanded airbag 1A, the open-and-close type vent hole 10 is kept closed by means of the lid member 14 and the inside of the airbag 1A is kept at high inner pressure.

As illustrated in Figs. 8 and 9, when the occupant seated in the passenger seat is brought into contact with the occupant-facing surface 1F of the expanded airbag 1A, and the occupant-facing surface 1F is retreated by being pressed by means of the occupant seated in the passenger seat, the evagination portion 11 is allowed to be evaginated toward the opposite-to-occupant by just that much, and the evagination portion 11 is evaginated outside the airbag 1A by means of the gas pressure in the airbag 1A. Since the lid member 14 is moved toward the evagination portion 11 side by being pulled by means of the evagination portion 11 along with the evaginating operation of the evagination portion 11, the opening 15 becomes to be overlapped with the open-and-close type vent hole 10. Thereby, the gas becomes to be discharged outside the airbag 1A through the opening 15 and the open-and-close type vent hole 10, and the occupant seated in the passenger seat is softly received by means of the airbag 1A.

In the airbag 1A, the comparable gas pressure as that of the inner pressure of the airbag 1A is also constantly affected to the evagination portion 11 from the inside of the airbag 1A to the outside of the airbag 1. Therefore, until the evaginating operation of the evagination portion 11 is completed, the lid member 14 is strongly pulled to the evagination portion 11 side by means of the evagination portion with the comparable force as that of the inner pressure of the airbag 1A 11. Thereby, the lid member 14 is assuredly moved up to a predetermined position by being pulled by means of the evagination portion 11, and the open-and-close type vent hole 10 becomes to be assuredly opened by a predetermined opening amount.

In this airbag 1A, since the lid member 14 is provided in a separate body from the tether 12, there is no need to dispose the open-and-close type vent hole 10 and the tether 12 at positions allowing the same to face each other, the open-and-close type vent hole 10 and the tether 12 can be disposed at high flexibility.

In each of the embodiments in the aforementioned Figs. 1 through 5, and Figs. 6 through 9, although the opening 15 is provided only one in number at the rear end side of the lid member 14, respectively, two or more openings 15 may be provided.

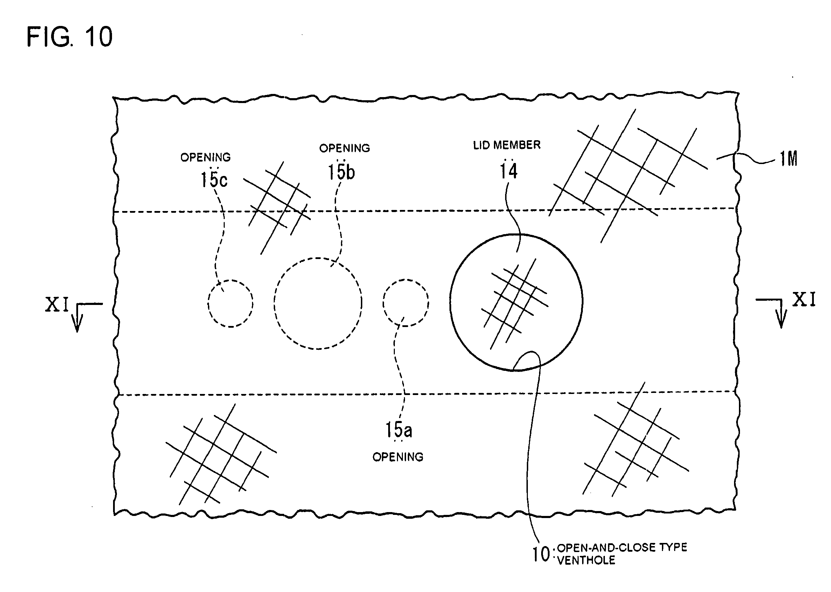

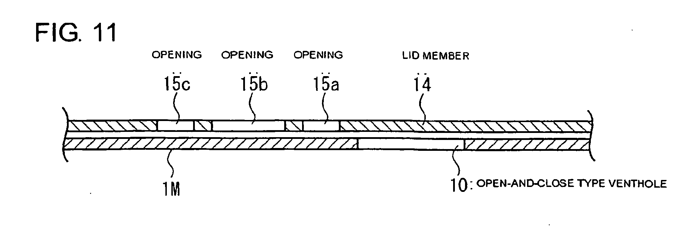

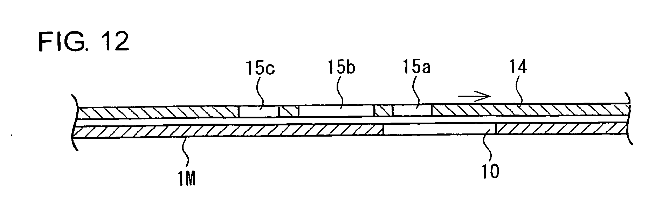

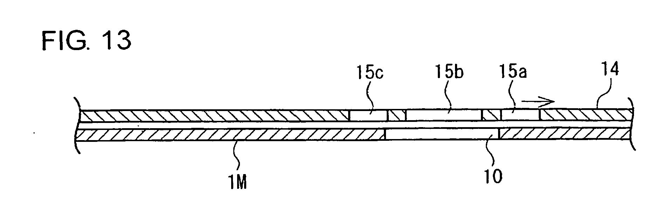

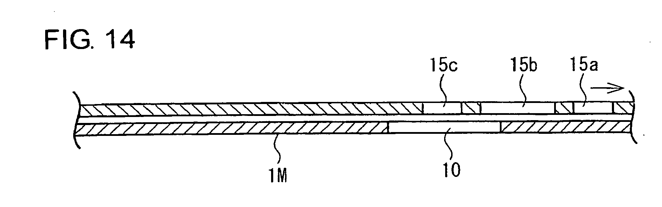

Fig. 10 is a side elevation illustrating the vicinity of an open-and-close type vent hole of an airbag according to a thus constructed embodiment, Fig. 11 is a cross-sectional view taken along a line XI-XI in Fig. 10, Figs. 12 through 14 are cross-sectional views illustrating the same part as that in Fig. 11 illustrating an opening operation of the open-and-close type vent hole. Incidentally, Figs. 10 and 11 illustrate a closed state of the open-and-close type vent hole, Fig. 12 illustrates a state where a first opening is overlapped with the open-and-close type vent hole, Fig. 13 illustrates a state where a second opening is overlapped with the open-and-close type vent hole, and Fig. 14 illustrates a state where a third opening is overlapped with the open-and-close type vent hole 10. In Figs. 10 through 14, a left side in the drawings corresponds to the occupant-facing surface at the time when the airbag is expanded, and a right side in the drawings corresponds to the side of the opposite-to-occupant side surface.

In the embodiments in Figs. 10 through 14, on the rear end side of the lid member 14, three openings 15a, 15b, and 15c, which are disposed at different positions from each other in the approximately front and rear direction are provided. Hereinbelow, in openings 15a, 15b, and 15c, the opening 15a located at the first nearest position to the open-and-close type vent hole 10 is referred to as a first opening, the opening 15b located at the second nearest position to the open-and-close type vent hole 10 is referred to as a second opening, and the opening 15c located at the third nearest position is referred to as a third opening 15c.

In this embodiment, a first opening 15a and the third opening 15c have the approximately same inner diameter, and a second opening 15b is configured to have a larger inner diameter than that of the openings 15a and 15c. Incidentally, any of the openings 15a through 15c is configured to have smaller inner diameter than that of the open-and-close type vent hole 10. Further, distances between the openings 15a and 15b, and the openings 15b and 15c, next to each other, respectively, are configured to have a smaller length than the diameter of the open-and-close type vent hole 10.

The construction of the embodiment other than the above-described is the same as that in each of the embodiments in the above-described Figs. 1 through 5, or Figs. 6 through 9.

In this embodiment, in a state that the approximately entire evagination portion 11 is pulled into the airbag, as illustrated in Figs. 10 and 11, the lid member 14 is also overlapped with the open-and-close type vent hole 10, and any of the openings 15a through 15c is not overlapped with the open-and-close type vent hole 10. When the occupant-facing surface 1F of the expanded airbag is retreated by being pressed by the occupant, and the evagination portion 11 is evaginated outside the airbag in conjunction therewith, and the lid member 14 is moved to the evagination portion 11 side by being pulled by means of the evagination portion 11, as illustrated in Figs. 12 through 14, the first opening 15a, the second opening 15b, and the third opening 15c are overlapped with the open-and-close type vent hole 10 in sequence. Since the inner diameters of the respective openings 15a through 15c are different each other, the discharge amount of the gas from the open-and-close type vent hole 10 is changed depending on which one of the openings 15a through 15a is overlapped with the open-and-close type vent hole 10. Thereby, the impact-absorbing amount can be changed corresponding to the retreating amount of the occupant-facing surface 1F of the airbag.

Incidentally, in this embodiment, although any of the openings 15a through 15c is formed to have a round opening shape, the opening shapes of the respective openings 15a through 15c are not limited thereto. Furthermore, two, four, or more openings may be provided on the rear end side of the lid member 14. At least a part of openings may be arranged in an upper and lower direction, obliquely upper and lower direction, or the like to each other.

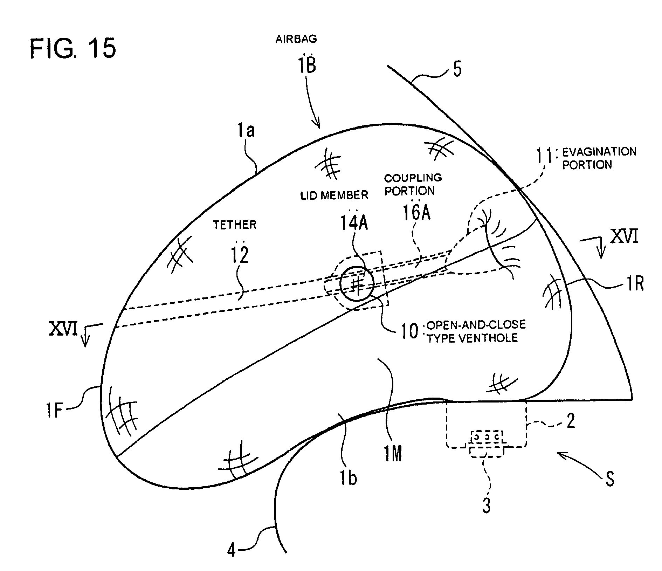

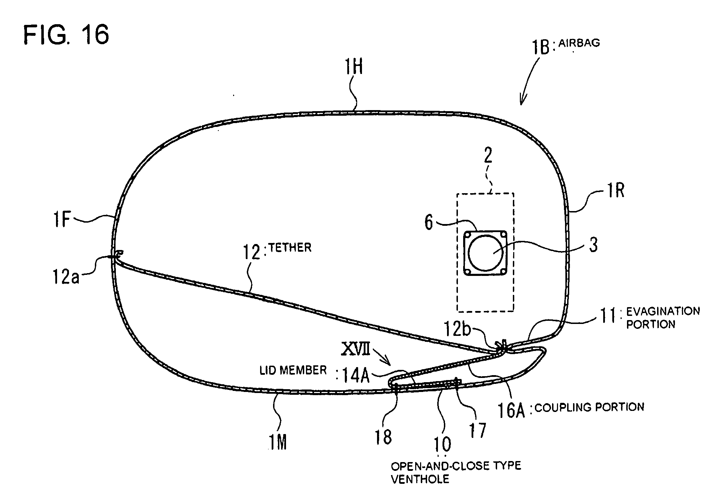

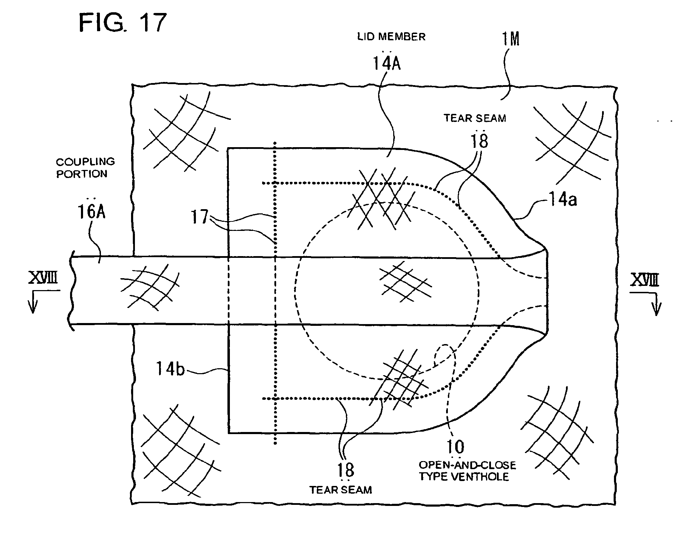

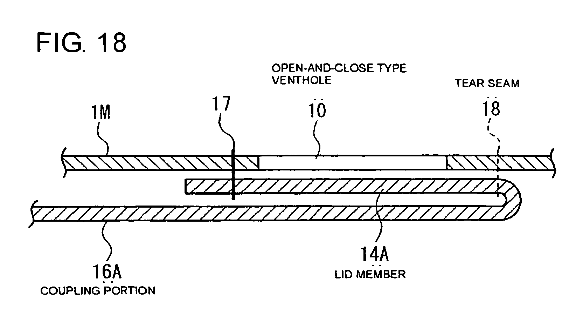

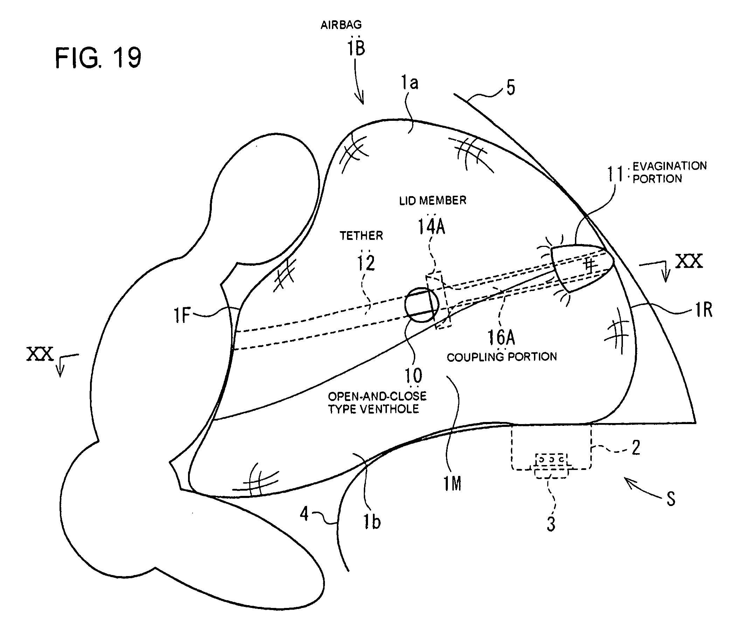

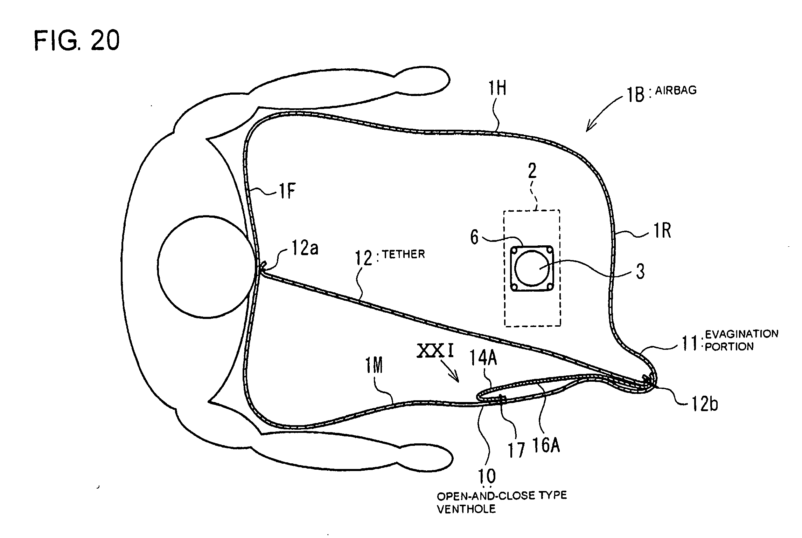

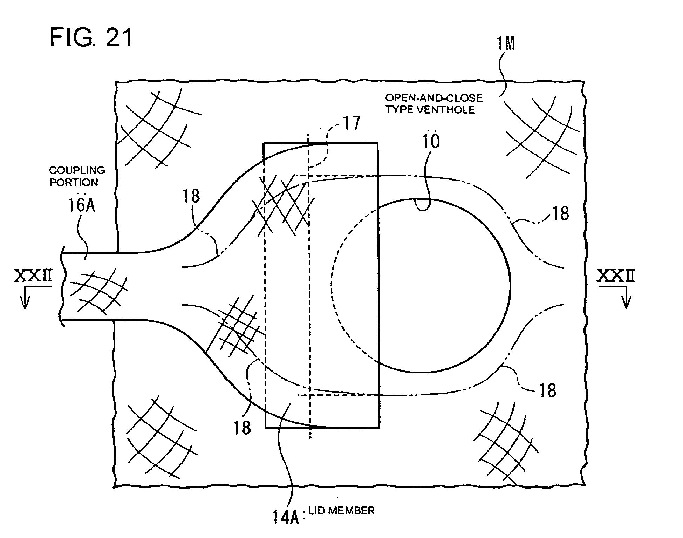

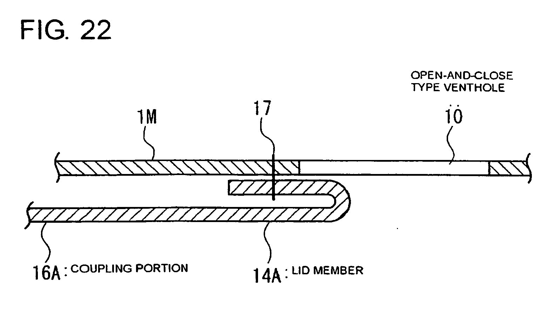

Fig. 15 is a side elevation illustrating the airbag and the airbag apparatus according to another embodiment, Fig. 16 is a cross-sectional view (approximately horizontal cross-sectional view) taken along a line XVI-XVI in Fig. 15, Fig. 17 is a side elevation illustrating a part XVII (in the vicinity of the lid member) in Fig. 16 looking from an inside of the airbag, Fig. 18 is a cross-sectional view taken along a line XVIII-XVIII in Fig. 17, Fig. 19 is a side elevation illustrating the airbag and the airbag apparatus of Fig. 15, Fig. 20 is a cross-sectional view (approximately horizontal cross-sectional view) taken along a line XX-XX in Fig. 19, Fig. 21 is a side elevation illustrating a part XXI (in the vicinity of the lid member) in Fig. 20 looking from the inside of the airbag, and Fig. 22 is a cross-sectional view taken along a line XXII-XXII in Fig. 21.

In an airbag 1B in this embodiment, a lid member 14A for covering the open-and-close type vent hole 10 is also separately provided from the tether 12 serving as an interlocking member for connecting the occupant-facing surface 1F of the airbag 1B and a tip end side in the evaginating direction of the evagination portion 11.

In this embodiment, the lid member 14A is formed to have an approximately semicircular plane-view shape including an approximately semicircular arc edge 14a and a string-shaped edge 14b connecting both ends of the semicircular arc edge 14a. The lid member 14A is overlapped with the open-and-close type vent hole 10 from an inside of the airbag 1B in a posture in which the vicinity of the middle in an extending direction of the semicircular arc edge 14a faces the side of the occupant-facing surface 1F of the airbag 1B, and the string-shaped edge 14b faces the side of the opposite-to-occupant side surface 1R. As illustrated in Fig. 17, the lid member 14A has a size to cover the entire open-and-close type vent hole 10.

In this embodiment, the lid member 14A is, as illustrated in Fig. 17, stitched to a peripheral edge portion of the open-and-close type vent hole 10 along the string-shaped edge 14b by means of a seam 17 formed of a stitching thread having relatively high strength in such a way that a combination thereof cannot be released. Moreover, the lid member 14A is stitched to the peripheral edge portion of the open-and-close type vent hole 10 along the semicircular arc edge 14a by means of a tear seam 18 formed of a stitching thread having relatively low strength in such a way that the combination thereof can be released. The seam 17 and the tear seam 18 are extended in a manner so as to surround the open-and-close type vent hole 10. Incidentally, in this embodiment, as illustrated in Fig. 17, the tear seam 18 is cut off in the vicinity of the middle in an extending direction of the semicircular arc edge 14a, and both end portions of the tear seam 18 facing the cut off portion extend toward an outer peripheral side of the lid member 14A, respectively, upon changing the directions.

The tear seam 18 is constructed to release the combination of the lid member 14A and the peripheral edge portion of the open-and-close type vent hole 10 by being ruptured when predetermined force or more is applied in a direction for peeling off the lid member 14A from the peripheral edge portion of the open-and-close type vent hole 10.

The seam 17 is configured not to be ruptured even when predetermined tension force or more is applied.

In this embodiment, in the vicinity of the middle in the extending direction of the semicircular arc edge 14a of the lid member 14A, namely on the side of the occupant-facing surface 1F of the lid member 14A, a belt-shaped coupling portion 16A continues. An end portion (tip end) of the coupling portion 16A on a side opposite to the lid member 14 is combined with the airbag-inside surface on a tip end side in the evaginating direction of the evagination portion 11. Incidentally, as illustrated in Fig. 16, in this embodiment, the tip end side of the coupling portion 16A is also overlapped with the tip end side of the tether 12 and stitched to the evagination portion 11 in an integral manner by means of the seam 12b. However, the combination method of the coupling portion 16A with the evagination portion 11 is not limited thereto.

In this embodiment, although the lid member 14A and the coupling portion 16A are formed in an integral manner by a common base cloth, the lid member 14A and the coupling portion 16A may be formed in a separate body, and a construction may be made in such a way that a rear end side of the coupling portion 16A is combined with the lid member 14a by means of the stitching work or the like.

In this embodiment, the tether 12 is also stretched between the occupant-facing surface 1F and the evaginating direction of the evagination portion 11 in the airbag 1A without inserting the halfway portion thereof into the tether insertion portion. In this embodiment, in a case that the evagination portion 11 is evaginated outside the airbag 1B, the lid member 14A is also moved toward the evagination portion 11 side by being pulled by means of the evagination portion 11 via the coupling portion 16A.

Length of the coupling portion 16A is, as illustrated in Fig. 16, formed to have a dimension such as that at a time when the airbag 1B is expanded, and in a state that the approximately entire evagination portion 11 is pulled into the inside of the airbag 1B by means of the tether 12, the coupling portion 16A is tensed (tightly stretched) between the tip end side of the evagination portion 11 and the lid member 14A.

In this embodiment, the airbag 1B is also folded back in a state that the approximately entire evagination portion 11 is previously intruded into the airbag 1B when folded back.

The other construction of the airbag 1B is the same as that in the airbag 1 in the embodiments in Figs. 1 through 5 described above.

An operation of the passenger airbag apparatus S provided with the airbag 1B is as follows.

At a time when the vehicle where the passenger airbag S is mounted encounters a collision, or the like, the inflator 3 is activated to blow out the gas and the airbag 1B starts to be expanded by means of the gas from the inflator 3. This airbag 1B pushes open the lid and is expanded and developed from the upper surface of the instrument panel 4 toward the occupant seated in the passenger seat.

In this embodiment, since the lid member 14A is stitched to the peripheral edge portion of the open-and-close type vent hole 10 by means of the seam 17 and tear seam 18 in a state of covering the open-and-close type vent hole 10, the open-and-close type vent hole 10 is closed by means of the lid member 14A from an initial stage of an expanding operation of the airbag 1B, and a discharge of the gas from the open-and-close type vent hole 10 is limited. Therefore, the airbag 1B is rapidly expanded.

By means of the occupant-facing surface 1F that is developed to the side of the occupant seated in the passenger seat along with the expanding operation of the airbag 10B, the tether 12 is pulled to the side of the occupant seated in the passenger seat, and the evagination portion 11 becomes to be blocked to be evaginated outside the airbag 1B. Thereby, as illustrated in Figs. 15 and 16, until the occupant seated in the passenger seat is brought into contact with the occupant-facing surface 1F of the expanded airbag 1B, the evagination portion 11 does not pull the lid member 14A and the open-and-close type vent hole 10 is kept closed by means of the lid member 14A and the inside of the airbag 1B is kept at high inner pressure.

As illustrated in Figs. 19 and 20, when the occupant seated in the passenger seat is brought into contact with the occupant-facing surface 1F of the expanded airbag 1B, and the occupant-facing surface 1F is pressed by means of the occupant seated in the passenger seat and retreated, the evagination portion 11 is allowed to be evaginated to the opposite-to-occupant side by just that much, and the evagination portion 11 is evaginated outside the airbag 1B by means of the gas pressure in the airbag 1B. Along with the evaginating operation of the evagination portion 11, the lid member 14 is pulled by means of the evagination portion 11 via the coupling portion 16A. Further, when the pulling force applied to the lid member 14A by means of the evagination portion 11 reaches a predetermined strength or more, the tear seam 18 is ruptured, the lid member 14A is peeled off from the peripheral edge portion of the open-and-close type vent hole 10 as illustrated in Figs. 17 and 18, and the open-and-close type vent hole 10 is opened. Thereby, the gas becomes to be discharged outside the airbag 1B through the open-and-close type vent hole 10 and the occupant seated in the passenger seat is softly received by means of the airbag 1B.

In the airbag 1B, the comparable gas pressure as that of the inner pressure of the airbag 1B is also constantly affected to the evagination portion 11 from the inside of the airbag 1B to the outside of the airbag 1B. Therefore, until the evaginating operation of the evagination portion 11 is completed, the lid member 14A is strongly pulled to the evagination portion 11 side by means of the evagination portion with the comparable force as that of the inner pressure of the airbag 1B 11. Thereby, the lid member 14A is assuredly peeled off to a predetermined position by being pulled by means of the evagination portion 11, and the open-and-close type vent hole 10 becomes to be assuredly opened by a predetermined opening amount.

In this embodiment, the lid member 14A is stitched to the peripheral edge portion of the open-and-close type vent hole 10 by means of the tear seam 18, and the lid member 14A closes the open-and-close type vent hole 10 without being peeled off from the peripheral edge portion of the open-and-close type vent hole 10, until the lid member 14A becomes to be pulled by means of the evagination portion 11 via the coupling portion 16A with the predetermined force or more, namely until the inside of the airbag 1B becomes to have the predetermined pressure or more. Thereby, the occupant seated in the passenger seat can firmly be received by means of the airbag 1B whose inner pressure is fully raised.

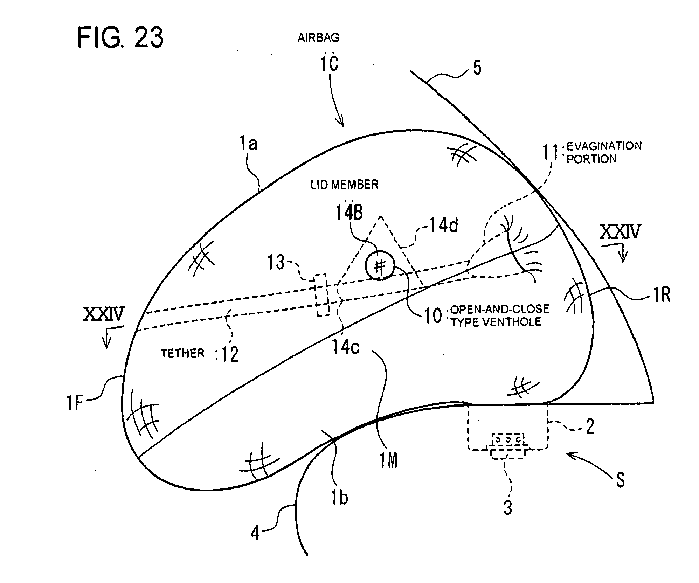

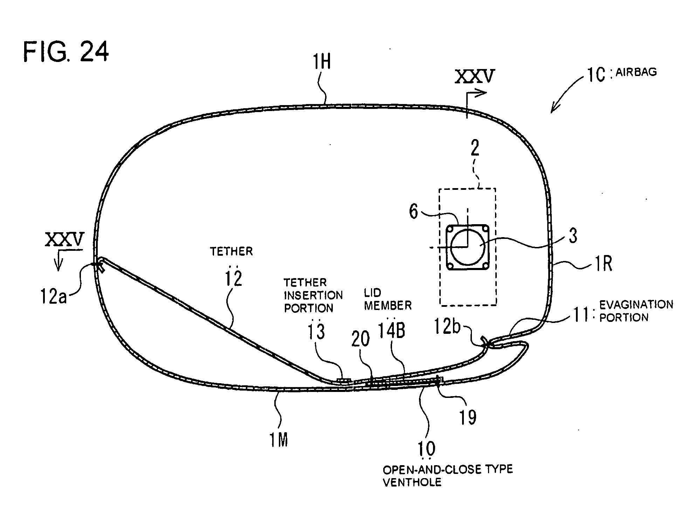

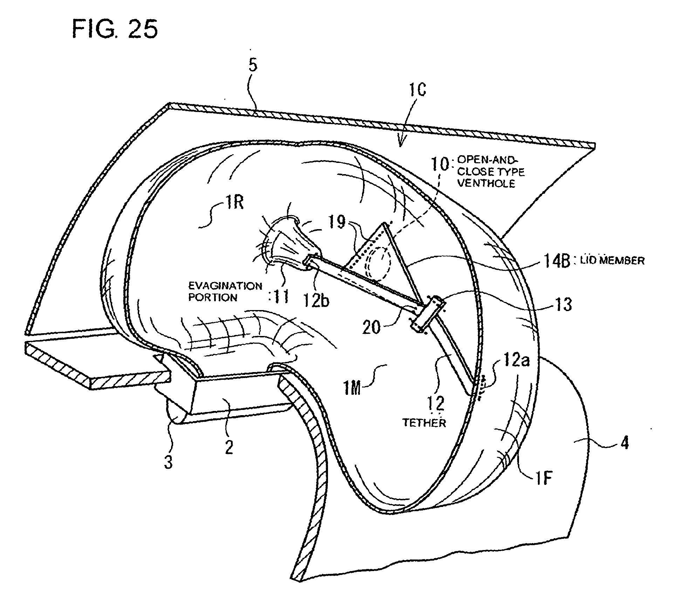

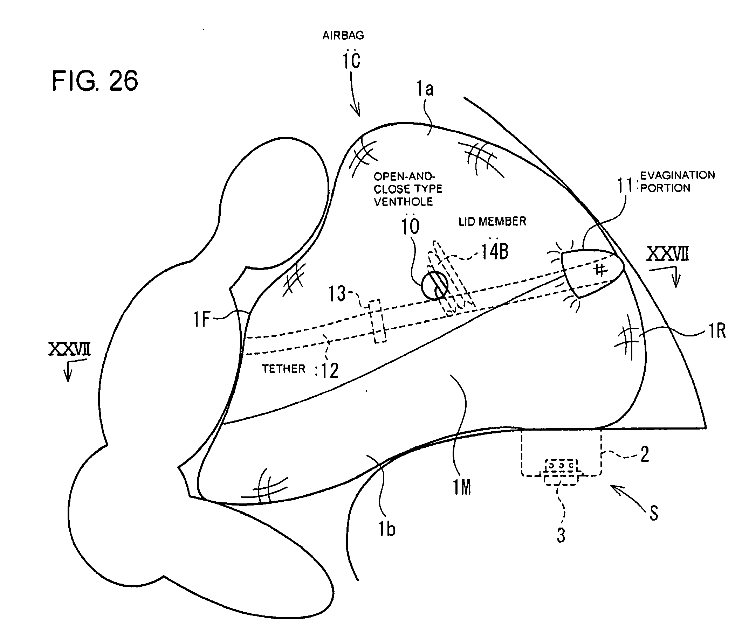

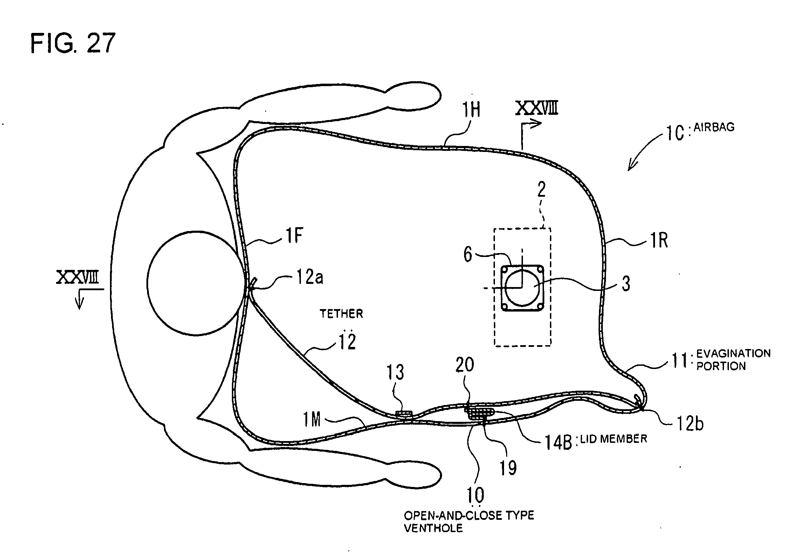

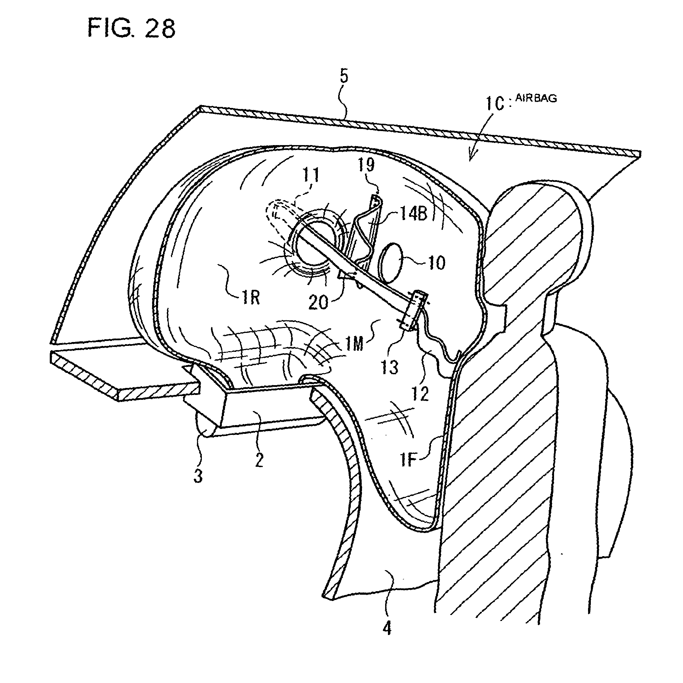

Fig. 23 is a side elevation illustrating the airbag and the airbag apparatus according to a further embodiment, Fig. 24 is a cross-sectional view (approximately horizontal cross-sectional view) taken along a line XXIV-XXIV in Fig. 23, Fig. 25 is a cross-sectional perspective view taken along a line XXV-XXV in Fig. 24, Fig. 26 is a side elevation illustrating the airbag and the airbag apparatus of Fig. 23, Fig. 27 is a cross-sectional view (approximately horizontal cross-sectional view) taken along a line XXVII-XXVII in Fig. 26, and Fig. 28 is a cross-sectional perspective view taken along a line XXVIII-XXVIII in Fig. 27. Incidentally, Figs. 23 through 25 illustrate a state before the occupant is brought into contact with the expanded airbag, and Figs. 26 through 28 illustrate a state after the occupant is brought into contact with the expanded airbag.

In an airbag 1C in this embodiment, a lid member 14B for covering the open-and-close type vent hole 10 is coupled with a halfway portion in a longitudinal direction of the tether 12 serving as an interlocking member for connecting the occupant-facing surface 1F of the airbag 1B and a tip end side in the evaginating direction of the evagination portion 11.

In this embodiment, the lid member 14B is constructed with an approximately triangular base cloth that is formed in a separate body from the tether 12. The lid member 14B is overlapped with the open-and-close type vent hole 10 from the inside of the airbag 1C in a posture in which, a corner portion 14c faces the side of the occupant-facing surface 1F of the airbag 1C, and an edge 14d that faces the corner portion 14c faces the side of the opposite-to-occupant side surface 1R. As illustrated in Figs. 23, the lid member 14B has a size to cover the entire open-and-close type vent hole 10. Incidentally, the shape or the like of the lid member 14B is not limited to the above-described.

In this embodiment, the lid member 14B is stitched to the peripheral edge portion of the open-and-close type vent hole 10 along the edge 14d on the side of the opposite-to-occupant side surface 1R by means of a seam 19 formed from a stitching thread having relatively high strength, as illustrated in Figs. 24 and 25, in such a way that a combination thereof cannot be released. The part of the lid member 14B other than the above-described is not combined with the peripheral edge portion of the open-and-close type vent hole 10.

The corner portion 14c of the lid member 14B is combined with the halfway portion in the longitudinal direction of the tether 12 by means of the stitching work or the like. A reference numeral 20 denotes the seam formed by the stitching work.

In this embodiment, in the same manner as that of the above-described embodiments in Figs. 1 through 5, the tether insertion portion 13 is provided at a portion in the vicinity of the open-and-close type vent hole 10 of the right side surface 1M of the airbag 1C, and the halfway portion of the tether 12 is inserted into the tether insertion portion 13.

In this embodiment, the approximately entire evagination portion 11 is also previously intruded into the airbag 1C when the same is folded back, and the airbag 1C is folded back in a state that the lid member 14B is overlapped with the open-and-close type vent hole 10.

The construction of the airbag 1C other than the above-described is the same as that of the airbag 1 in the above-described embodiments in Figs. 1 through 5.

An operation of the passenger airbag apparatus S provided with the airbag 1C is as follows.

At a time when the vehicle on which the passenger airbag apparatus S is mounted encounters a collision or the like, the inflator 3 is activated to blow out the gas, and the airbag 1C starts to be expanded by means of the gas from the inflator 3. The airbag 1C pushes open the aforementioned lid and is expanded and developed from the upper surface of the instrument panel 4 to the occupant seated in the passenger seat.

In this embodiment, since the airbag 1C is also folded back in a state where the lid member 14B previously covers the open-and-close type vent hole 10, the airbag 1C is in a state that the open-and-close type vent hole 10 is closed by means of the lid member 14B from the initial stage of the expanding operation, and a discharge of the gas from the open-and-close type vent hole 10 is limited. Thereby, the airbag 1C is rapidly expanded.

The occupant-facing surface 1F is developed toward the side of the occupant seated in the passenger seat along with an expanding operation of the airbag 1C, and thereby the tether 12 is pulled toward the side of the occupant seated in the passenger seat and the evagination portion 11 is blocked to be evaginated outside the airbag 1C, as illustrated in Figs. 23 through 25. Further, along with this operation, the corner portion 14c side of the lid member 14B is pulled toward a direction separating from the edge 14d side by means of the tether 12, and the lid member 14B is brought to a state to be tensed along the airbag-inside surface of the aforementioned right side surface 1M of the airbag 1C. Thereby, the open-and-close type vent hole 10 is kept closed by means of the lid member 14B, and the inside of the airbag 1C is kept at high inner pressure.

As illustrated in Figs. 26 and 28, when the occupant seated in the passenger seat is brought into contact with the occupant-facing surface 1F of the expanded airbag 1C, and the occupant-facing surface 1F is retreated by being pressed by means of the occupant seated in the passenger seat, the evagination portion 11 is allowed to be evaginated toward the opposite-to-occupant side by just that much, and the evagination portion 11 is evaginated outside the airbag 1C by means of the gas pressure in the airbag 1C. Along with the evaginating operation of the evagination portion 11, the tether 12 is moved to the evagination portion 11 side by being pulled by means of the evagination portion 11, and following this operation, the corner portion 14c side of the lid member 14B is moved to the evagination portion 11 side in a riding up manner. Thereby, the open-and-close type vent hole 10 is opened and the gas becomes to be discharged outside the airbag 1C. Thereby, the occupant seated in the passenger seat is softly received by means of the airbag 1C.

In this airbag 1C, the comparable gas pressure as that of the inner pressure of the airbag 1C is also constantly affected to the evagination portion 11 from the inside of the airbag 1C to the outside of the airbag 1C. Therefore, until the evaginating operation of the evagination portion 11 is completed, the lid member 14B is strongly pulled to the evagination portion 11 side by means of the evagination portion with the comparable force as that of the inner pressure of the airbag 1C 11. Thereby, the lid member 14B is assuredly moved up to a predetermined position by being pulled by means of the evagination portion 11, and the open-and-close type vent hole 10 becomes to be assuredly opened by a predetermined opening amount.

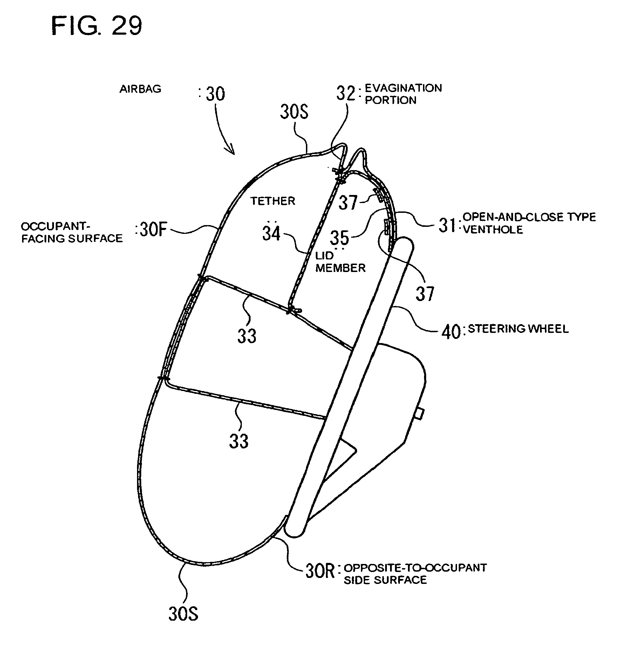

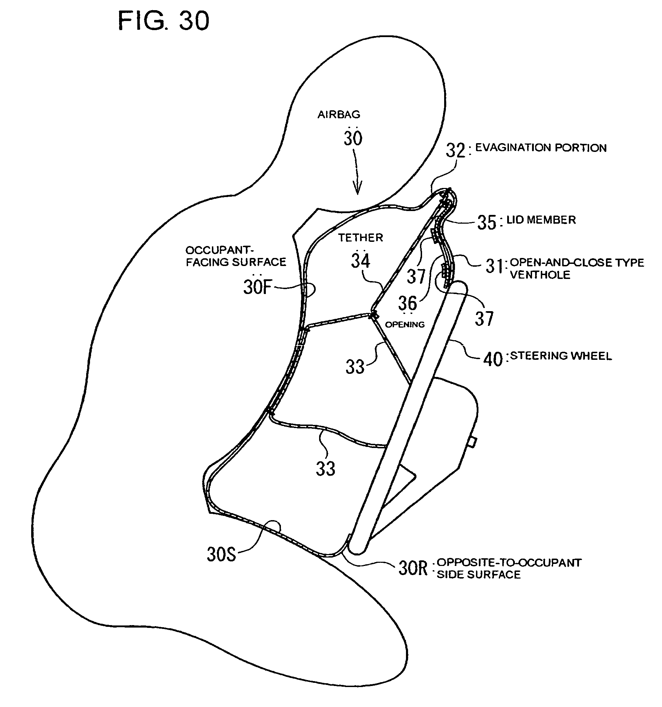

Figs. 29 and 30 illustrate an application example to the airbag for use in a driver's seat and the airbag apparatus for use in the driver's seat. Figs. 29 and 30 are longitudinal cross-sectional views illustrating the airbag for use in the driver's seat and the airbag apparatus for use in the driver's seat according to the embodiment, respectively. Incidentally, Fig. 29 illustrates a state before the occupant is brought into contact with the expanded airbag, and Fig. 30 illustrates a state after the occupant is brought into contact with the expanded airbag.

The airbag 30 for use in the driver's seat according to this embodiment is configured to be expanded so as to cover an occupant side of the steering wheel 40 of the vehicle. In this embodiment, in the opposite-to-occupant side surface 30R at a time when the airbag 30 is expanded, namely in a surface on the steering wheel 40 side, an open-and-close type vent hole 31 is provided, and in a side peripheral surface at the time when the airbag 30 is expanded, an evagination portion 32 capable of evaginating outside the airbag 30 is provided.

As illustrated in Figs. 29 and 30, in this embodiment, the open-and-close type vent hole 31 is disposed at an upper part relative to a center portion of the opposite-to-occupant side surface 30R in a state where the steering wheel 40 takes a steering posture at a time when the vehicle goes straight ahead, and the evagination portion 32 is disposed on an upper surface of the airbag 30 at this time. However, the disposition of the open-and-close type vent hole 31 and the evagination portion 32 is not limited thereto. Hereinbelow, an upper and lower direction of the airbag 30 refers to an upper and lower direction in a state where the steering wheel 40 takes the steering posture at the time when the vehicle goes straight ahead.

In this embodiment, a hanging strap 33 that couples the vicinity of a center of the occupant-facing surface 30F at the time when the airbag 30 is expanded and the vicinity of a center of the opposite-to-occupant side surface 30R is provided in the airbag 30. In this embodiment, two hanging straps 33 are provided while displacing the positions thereof in the upper and lower direction of the airbag 30. However, the number and the disposition of the hanging straps 33 are not limited thereto.

In this embodiment, at a halfway portion of the upper side hanging strap 33, one end side of the tether 34 serving as an interlocking member is coupled. The other end of the tether 34 is coupled with a tip end side in the evaginating direction of the evagination portion 32. Incidentally, the one end side of the tether 34 may be directly coupled with an airbag-inside surface of the occupant-facing surface 30F.

In this embodiment, a lid member 35 that covers the open-and-close type vent hole 31 is disposed on an inside of the airbag 30. In this embodiment, the lid member 35 is formed into a belt-like shape, and extends while passing transversely across the open-and-close type vent hole 31 in an airbag 30 in a radial direction of the airbag 30. An end portion of the lid member 35 on an airbag-outer periphery side is coupled with a tip end side in the evaginating direction of the evagination portion 32. In this airbag 30, the lid member 35 is moved toward an outer periphery side of the airbag 30 by being pulled by means of the evagination portion 32 when the evagination portion 32 is evaginated outside the airbag 30.

In this embodiment, an opening 36 that is overlapped with the open-and-close type vent hole 31 at a time when the lid member 35 is moved toward the airbag-outer periphery side is provided at an end portion of the lid member 35 on the airbag-inner periphery side.

In this embodiment, in the airbag-inside surface of the opposite-to-occupant side surface 30R, lid member insertion portions 37 are provided on the airbag-outer periphery side and the airbag-inner periphery side, respectively, while sandwiching the open-and-close type vent hole 31. Further, the airbag-outer periphery side and the airbag-inner periphery side of the lid member 35 relative to the open-and-close type vent hole 31 are respectively inserted into the lid member insertion portions 37.

In this embodiment, when the airbag 30 is folded back, the approximately entire evagination portion 32 is previously intruded into the airbag 30, and the airbag 30 is folded back in a state where the lid member 35 covers the open-and-close type vent hole 31.

A folded-back body of the airbag 30 and the inflator (illustration is omitted) are attached to the retainer (illustration is omitted), and a module cover (illustration is omitted) is mounted in a manner so as to cover the folded-back body of the airbag 30, and thus the airbag apparatus for use in the driver's seat is constructed. The airbag apparatus for use in the driver's seat is installed on an occupant side of a center portion of the steering wheel 40.

An operation of the airbag apparatus for use in the driver's seat is as follows.

At a time when the vehicle on which the airbag apparatus for use in the driver's seat is mounted encounters a collision or the like, the inflator is activated to blow out the gas, and the airbag 30 starts to be expanded by means of the gas from the inflator. The airbag 30 pushes open the aforementioned module cover and is expanded and developed in a manner so as to cover the occupant side of the steering wheel 40.

In this embodiment, since the airbag 30 is also folded back in a state where the lid member 35 previously covers the open-and-close type vent hole 31, the airbag 30 is in a state that the open-and-close type vent hole 31 is closed by the lid member 35 from a time the airbag 30 starts to be expanded, and the gas is limited to be discharged from the open-and-close type vent hole 31. Thereby, the airbag 30 is rapidly expanded.

The occupant-facing surface 30F is developed toward the side of the occupant seated in the driver's seat along with the expanding operation of the airbag 30, and thereby the hanging strap 33 is tensed between the occupant-facing surface 30F and the opposite-to-occupant side surface 30R, and the tether 34 is pulled toward an airbag-center side along with this operation, and the evagination portion 32 is blocked to be evaginated outside the airbag 30. Thereby, as illustrated in Fig. 29, until the occupant seated in the driver's seat is brought into contact with the occupant-facing surface 30F of the expanded airbag 30, the open-and-close type vent hole 31 is kept closed by means of the lid member 35 and the inside of the airbag 30 is kept at high inner pressure.

As illustrated in Fig. 30, when the occupant seated in the driver's seat is brought into contact with the occupant-facing surface 30F of the expanded airbag 30, and the occupant-facing surface 30F is retreated by being pressed by means of the occupant seated in the driver's seat, the hanging strap 33 is loosened and the evagination portion 32 is allowed to be evaginated by just that much, and the evagination portion 32 is evaginated outside the airbag 30 by means of the gas pressure in the airbag 30. Since the lid member 35 is moved toward the airbag-outer periphery side by being pulled by means of the evagination portion 32 along with the evaginating operation of the evagination portion 32, the opening 36 becomes to be overlapped with the open-and-close type vent hole 31. Thereby, the gas becomes to be discharged outside the airbag 30 through the opening 36 and the open-and-close type vent hole 31, and the occupant seated in the driver's seat is softly received by means of the airbag 30.

In the airbag 30, the comparable gas pressure as that of the inner pressure of the airbag 30 is also constantly affected to the evagination portion 32 from the inside of the airbag 30 to the outside of the airbag 30. Therefore, until the evaginating operation of the evagination portion 32 is completed, the lid member 35 is strongly pulled to the airbag-outer periphery side by means of the evagination portion with the comparable force as that of the inner pressure of the airbag 30 32. Thereby, the lid member 35 is assuredly moved up to a predetermined position by being pulled by means of the evagination portion 32, and the open-and-close type vent hole 31 becomes to be assuredly opened by a predetermined opening amount.

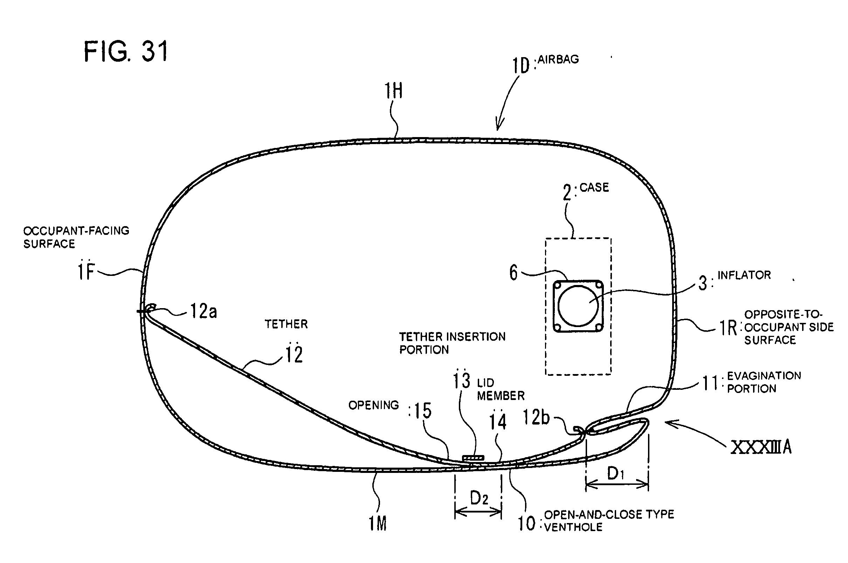

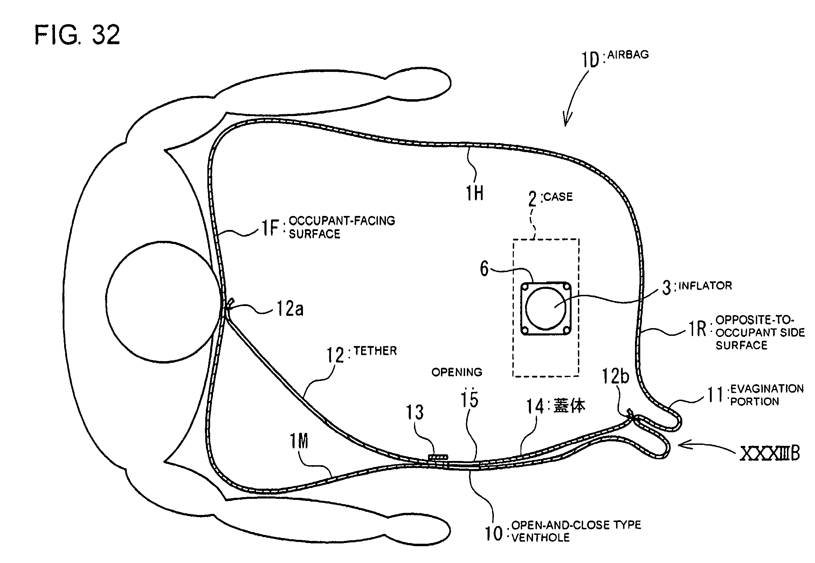

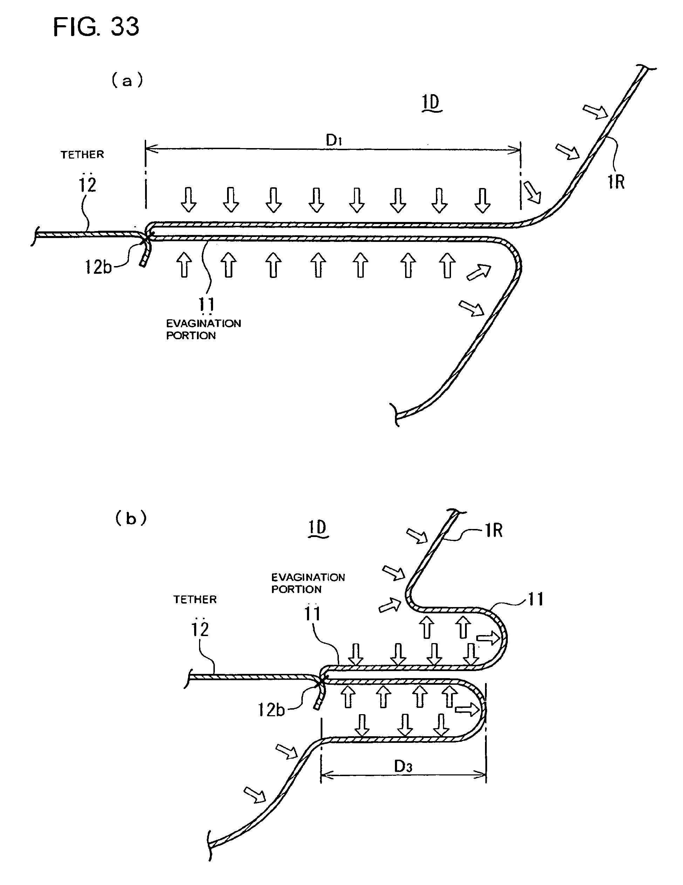

Figs. 31 and 32 are approximately horizontal cross-sectional views illustrating an airbag and an airbag apparatus according to still another embodiment, Figs. 33(a) and 33(b) are enlarged views illustrating a part XXXIIIA of Fig. 31 and a part XXXIIIB (in the vicinity of evagination portion) of Fig. 32, respectively. Incidentally, Fig. 31 illustrates a state before the occupant is brought into contact with the expanded airbag, and Fig. 32 illustrates a state after the occupant is brought into contact with the expanded airbag. Fig. 33(a) illustrates a state where the evagination portion is pulled into the airbag, and Fig. 33(b) illustrates a state where the evagination portion is evaginated outside the airbag until the open-and-close type vent hole is opened.

In an airbag 1D of this embodiment, in a state that the approximately entire evagination portion 11 is evaginated outside the airbag 1D, a length D₁ in the evaginating direction of the evagination portion 11 (refer to Fig. 31 and Fig. 33(a)) is configured to be larger than a moving distance D₂ in which the lid member 14 moves from a position where the lid member 14 closes the open-and-close type vent hole 10 to a position where the opening 15 on the rear end side of the lid member 14 is overlapped with the open-and-close type vent hole 10 in an approximately concentric manner.

In the present invention, it is preferable to form a maximum evaginating length D₁ of the evagination portion 11 to be longer than the moving direction D₂ of the lid member 14 by 10mm to 300mm, specifically, by 40mm to 200mm.

The construction of the airbag 1D other than that described above is the same as that of the airbag 1 in Figs. 1 through 5, and the same numerals as that in Figs. 1 through 5 used in Figs. 31 and 32 denote the same elements.

An operation of the passenger airbag apparatus provided with the thus constructed airbag 1D is the same as that of the embodiments in Figs. 1 through 5 except that when the evagination portion 11 is evaginated outside the airbag 1D, the lid member 14 is moved up to a position where the opening 15 is overlapped with the open-and-close type vent hole 10 before the approximately entire evagination portion 11 is evaginated outside the airbag 1D.

That is, in this embodiment, at a time when the vehicle encounters a collision or the like, the inflator 3 is also activated to blow out the gas, and the airbag 1D starts to be expanded by means of the gas from the inflator 3. The airbag 1D pushes open the lid and is expanded and developed from the upper surface of the instrument panel 4 to the occupant seated in the passenger seat.

In this embodiment, the airbag 1D is also folded back in a state that the lid member 14 previously covers the open-and-close type vent hole 10. Therefore, the airbag 1D is in a state where the open-and-close type vent hole 10 is closed by the lid member 14 from a time the airbag 1D starts to be expanded, and the gas is limited to be discharged from the open-and-close type vent hole 10. Thereby, the airbag 1D is rapidly expanded.

The occupant-facing surface 1F is developed toward the side of the occupant seated in the passenger seat along with an expanding operation of the airbag 1D, and thereby the tether 12 is pulled toward the side of the occupant seated in the passenger seat and the evagination portion 11 is blocked to be evaginated outside the airbag 1D. Thereby, as illustrated in Fig. 31, until the occupant seated in the passenger seat is brought into contact with the occupant-facing surface 1F of the expanded airbag 1D, the open-and-close type vent hole 10 is kept closed by means of the lid member 14 and the inside of the airbag 1D is kept at high inner pressure.

As illustrated in Fig. 32, when the occupant seated in the passenger seat is brought into contact with the occupant-facing surface 1F of the expanded airbag 1D, and the occupant-facing surface 1F is retreated by being pressed by means of the occupant seated in the passenger seat, the evagination portion 11 is allowed to be evaginated toward the opposite-to-occupant side by just that much, and the evagination portion 11 is evaginated outside the airbag 1D by means of the gas pressure in the airbag 1D. Since the tether 12 is moved toward the evagination portion 11 side by being pulled by means of the evagination portion 11 along with the evaginating operation of the evagination portion 11, the opening 15 becomes to be overlapped with the open-and-close type vent hole 10. Thereby, the gas becomes to be discharged outside the airbag 1D through the opening 15 and the open-and-close type vent hole 10, and the occupant seated in the passenger seat is softly received by means of the airbag 1D.

In the airbag 1D, the comparable gas pressure as that of the inner pressure of the airbag 1D is also constantly affected to the evagination portion 11 from the inside of the airbag 1D to the outside of the airbag 1D. Therefore, the tether 12 is strongly pulled to the evagination portion 11 side by means of the evagination portion with the comparable force as that of the inner pressure of the airbag 1D 11. Thereby, the tether 12 is assuredly moved up to a predetermined position by being pulled by means of the evagination portion 11, and the open-and-close type vent hole 10 becomes to be assuredly opened by a predetermined opening amount.

In the airbag 1D, the maximum evaginating length D₁ of the evagination portion 11 is formed to be longer than the moving direction D₂ in which the lid member 14 moves from the position where the lid member 14 closes the open-and-close type vent hole 10 to the position where the opening 15 is overlapped with the open-and-close type vent hole 10. Accordingly, as illustrated in Fig. 32, even when the lid member 14 is pulled and moved by means of the evagination portion 11 until the opening 15 is overlapped with the open-and-close type vent hole 10, the evagination portion 11 is not completely evaginated outside the airbag 1D, and the tip end side thereof is still positioned in the inside of the airbag 1D or in the inside of a base end side of the evagination portion 11.

As described above, it is preferable that the maximum evaginating length D₁ of the evagination portion 11 is longer then the moving distance D₂ of the lid member 14 by 10mm to 300mm, and more specifically, by 40mm to 200mm. In this case, after the lid member 14 is moved until the open-and-close type vent hole 10 is opened, the tip end side of the evagination portion 11 remains in the inside of the airbag 1D or in the inside of the base end side of the evagination portion 11 across a length D₃ (refer to Fig. 33(b)) of, preferably, from 5mm to 150mm, and more preferably, from 20mm to 100mm without being evaginated outside the airbag 1D.

Thereby, since the evagination portion 11 also continues to pull the tether 12 to try to be further evaginated outside the airbag 1D even after the lid member 14 is moved until the open-and-close type vent hole 10 is opened, the lid member 14 is assuredly held at a vent hole-open position.

Incidentally, by means of the airbag 1D, a comparable operation and advantages as that of the airbag 1 in Figs. 1 through 5 are also exerted.

Although the airbag 1D of this embodiment is constructed in such a way that in the airbag 1 in Figs. 1 through 5, the maximum evaginating length D₁ of the evagination portion 11 is configured to be larger than the moving distance D₂ of the lid member 14, even in each of the embodiments in the above described Figs. 6 through 9, Figs. 10 through 14, Figs. 15 through 22, Figs. 23 through 28, and Figs. 29 and 30, the maximum evaginating lengths of the respective evagination portions 11 and 32 are configured to be larger than the moving distances of the lid members 14, 14A, 14B, and 35, respectively, until the open-and-close type vent holes 10 and 31 are opened by respective predetermined amounts. Thereby, even in a case that the evagination portions 11 and 32 are brought into contact with the interior members in a vehicle room such as the windshield 5 or the like when being evaginated, the tethers 12 and 34 become to be constantly pulled in the evaginating direction of the evagination portion 11.

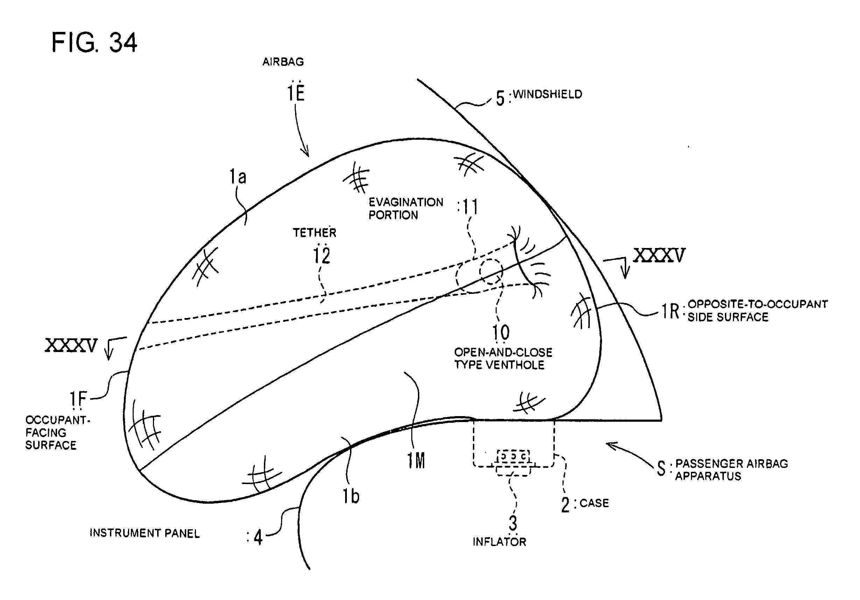

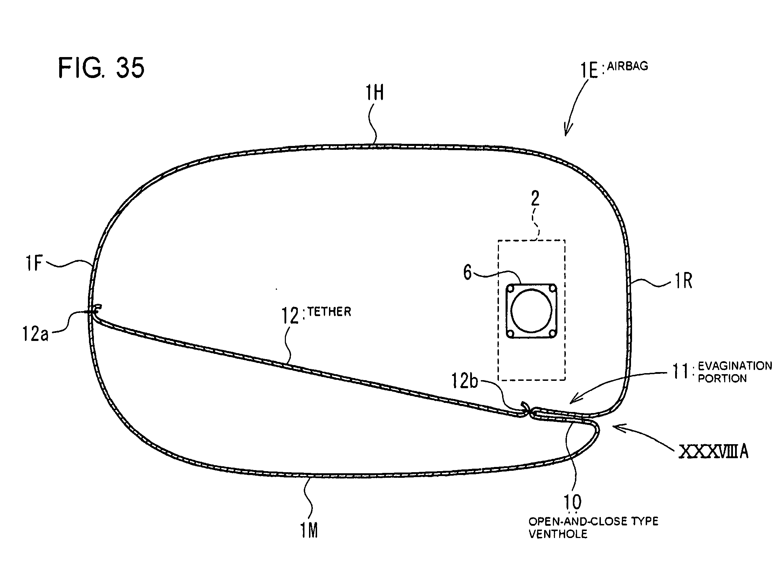

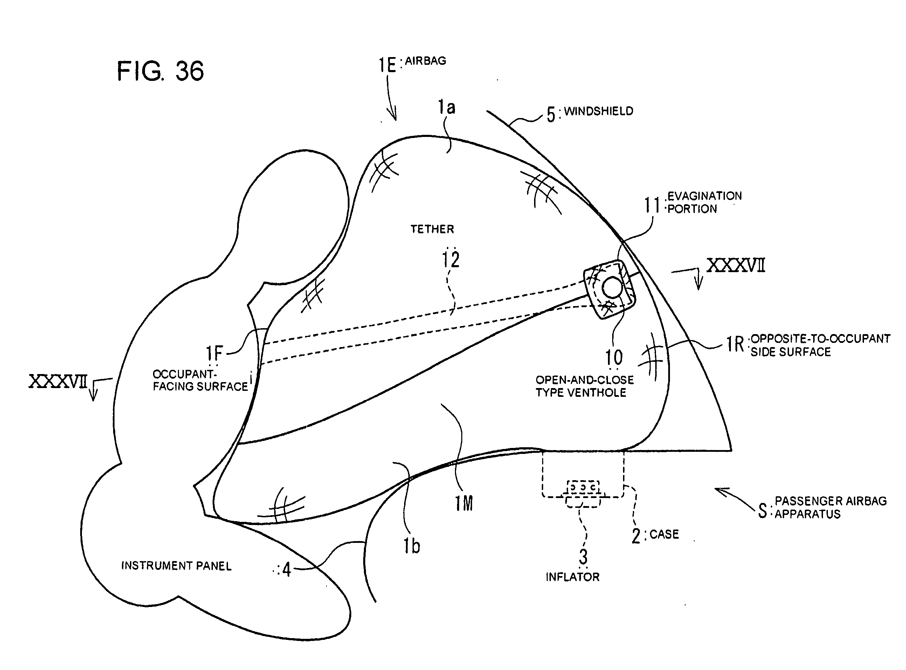

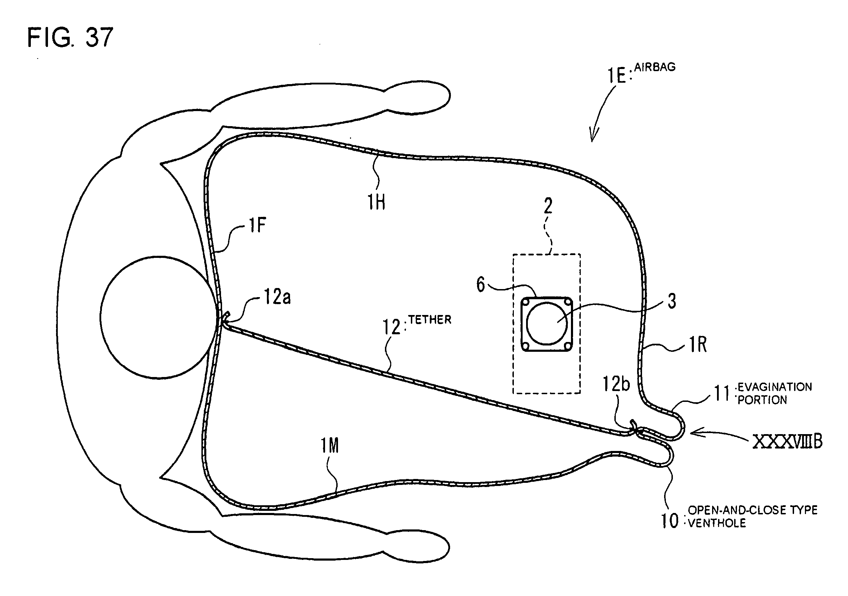

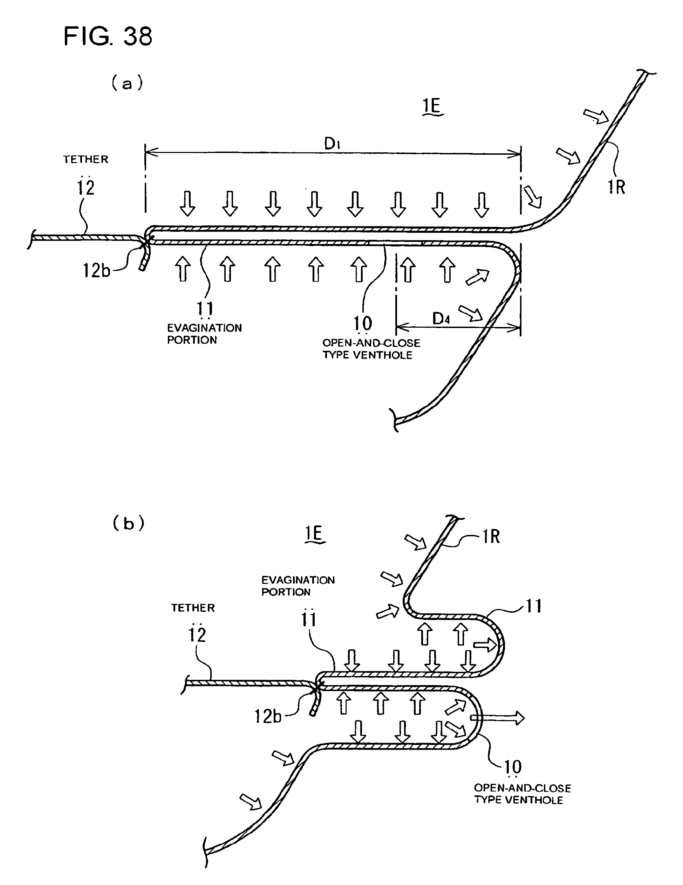

Fig. 34 is a cross-sectional view illustrating an airbag and an airbag apparatus according to another embodiment, Fig. 35 is a cross-sectional view (approximately horizontal cross-sectional view) taken along a line XXXV-XXXV in Fig. 34, Fig. 36 is a side elevation illustrating the airbag and the airbag apparatus of Fig. 34. Fig. 37 is a cross-sectional view (approximately horizontal cross-sectional view) taken along a line XXXVII-XXXVII in Fig. 36, and Fig. 38(a) and Fig. 38(b) are enlarged views illustrating a part XXXVIIIA of Fig. 35 and a part XXXVIIIB (in the vicinity of evagination portion) of Fig. 37, respectively. Incidentally, Figs. 34 and 35 illustrate a state before the occupant is brought into contact with the expanded airbag, and Figs. 36 and 37 illustrate a state after the occupant is brought into contact with the expanded airbag. Further, Fig. 38(a) illustrates a state where the evagination portion is pulled into the inside of the airbag, and Figs. 38(b) illustrates a state where the evagination portion is evaginated outside the airbag until the open-and-close type vent hole is exposed to the outside of the airbag.

In this embodiment, an airbag 1E is also the passenger airbag of the vehicle.

The airbag 1E is provided with the open-and-close type vent hole 10 for causing the gas to be discharged outside the airbag 1E from the inside of the airbag 1E, the evagination portion 11 provided in the opposite-to-occupant side surface 1R of the airbag 1E and capable of evaginating toward the outside from the airbag 1E by means of the gas pressure in the airbag 1E, and the tether 12 serving as an interlocking member for connecting the occupant-facing surface 1F of the airbag 1E and the tip end side in the evaginating direction of the evagination portion 11 while passing through inside the airbag 1E.

In the airbag 1E, the open-and-close type vent hole 10 is provided in the evagination portion 11, and is formed to allow the inside and outside of the evagination portion 11 to communicate with each other. That is, in this embodiment, the open-and-close type vent hole 10 is configured to cause the gas to be discharged from the inside of the airbag 1E to the outside thereof while passing through the inside of the evagination portion 11.

In this embodiment, as illustrated in Figs. 34 and 35, and Fig. 38(a) the open-and-close type vent hole 10 is provided in a halfway portion of the evaginating direction of the evagination portion 11. as illustrated in Fig. 38(a), it is preferable to form a distance D₄ from the base end side of the evagination portion 11 to a center of the open-and-close type vent hole 10 to be 5% to 90% of the maximum evaginating length D₁ of the evagination portion 11, and specifically, from 20% to 50% thereof.

In this embodiment, although a vent hole for allowing the inside and outside of the airbag 1E to communicate with each other is not provided in a portion other than that in the evagination portion 11 of the airbag 1E, the vent hole may also be provided in the portion other than that in the evagination portion 11.

In this embodiment, when the airbag 1E is folded back, the airbag 1E is folded back in a state where the approximately entire evagination portion 11 is previously intruded into the airbag 1E. Incidentally, folding back method of the airbag 1E is arbitrary, and is not limited to a specific folding back method.

The construction of the airbag 1E other than the above-described is the same as that of the above-described airbag 1 in Figs. 1 through 5, and the same numerals as that in Figs. 1 through 5 used in Figs. 34 through 38(b) denote the same elements.

An operation of the passenger airbag apparatus S where the thus constructed airbag 1E is provided is as follows.

At a time when the vehicle, on which the passenger airbag apparatus S is mounted, encounters a collision or the like, the inflator 3 is activated to blow out the gas, and the airbag 1E starts to be expanded by means of the gas from the inflator 3. The airbag 1E pushes open the lid and is expanded and developed from the upper surface of the instrument panel 4 to the occupant seated in the passenger seat.

In this embodiment, since the airbag 1E is folded back in the state that the approximately entire evagination portion 11 is previously intruded into the airbag 1E, the open-and-close type vent hole 10 is not exposed to the outside of the airbag 1E from an initial stage of an expanding operation of the airbag 1E. As a result, the discharge of the gas from the open-and-close type vent hole 10 is limited, and thereby the airbag 1E is rapidly expanded.

The occupant-facing surface 1F is developed toward the side of the occupant seated in the passenger seat along with the expanding operation of the airbag 1E, and thereby the tether 12 is pulled toward the side of the occupant seated in the passenger seat, and the evagination portion 11 is blocked to be evaginated outside the airbag 1E. Thereby, as illustrated in Figs. 34 and 35, until the occupant seated in the passenger seat is brought into contact with the occupant-facing surface 1F of the expanded airbag 1E, the open-and-close type vent hole 10 is kept to be disposed in the airbag 1E and the gas from the open-and-close type vent hole 10 is limited to be discharged. Therefore, the inside of the airbag 1E is kept at high inner pressure.

Incidentally, at this moment, the evagination portion 11 disposed in the airbag 1E is crushed by means of the gas pressure in the airbag 1E. Thereby, as illustrated in Fig. 38(a), a portion in the evagination portion 11, which faces the open-and-close type vent hole 10, is pressed to the open-and-close type vent hole 10, and thereby a closing capability of the open-and-close type vent hole 10 becomes high.

As illustrated in Figs. 36 and 37, when the occupant seated in the passenger seat is brought into contact with the occupant-facing surface 1F of the expanded airbag 1E, and the occupant-facing surface 1F is retreated by being pressed by means of the occupant seated in the passenger seat, the evagination portion 11 is allowed to be evaginated toward the opposite-to-occupant side by just that much, and the evagination portion 11 is evaginated outside the airbag 1E by means of the gas pressure in the airbag 1E. Thus, the evagination portion 11 is evaginated outside the airbag 1E and thereby the open-and-close type vent hole 10 also becomes to be exposed to the outside of the airbag 1E. As a result, the gas becomes to be discharged outside the airbag 1E while passing through the inside of the evagination portion 11 and the open-and-close type vent hole 10, and the occupant seated in the passenger seat is softly received by means of the airbag 1E.

In the airbag 1E, the comparable gas pressure as that of the inner pressure of the airbag 1E is also constantly affected to the evagination portion 11 from the inside of the airbag 1E to the outside of the airbag 1E. Therefore, the evagination portion 11 is strongly pushed out toward the outside of the airbag 1E with the gas pressure. Thereby, the open-and-close type vent hole 10 is assuredly exposed to the outside of the airbag 1E, and the open-and-close type vent hole 10 becomes to be assuredly opened by a predetermined opening amount.

In this embodiment, as illustrated in Fig. 38(a), the open-and-close type vent hole 10 is provided at the halfway portion in the evaginating direction of the evagination portion 11. Therefore, as illustrated in Figs. 36 and 37, and Fig. 38(b), even when the evagination portion 11 is evaginated outside the airbag 1E until the open-and-close type vent hole 10 is exposed to the outside of the airbag 1E, the evagination portion 11 is not completely evaginated outside the airbag 1E, and the tip end side of the evagination portion 11 is still positioned in the inside of airbag 1E or the inside of the base end side of the evagination portion 11. Thereby, since the evagination portion 11 continues to try to be further evaginated outside the airbag 1E even after the evagination portion 11 is evaginated outside the airbag 1E until the open-and-close type vent hole 10 is exposed to the outside of the airbag 1E, the open-and-close type vent hole 10 is held in state to be assuredly exposed to the outside of the airbag 1E.

Incidentally, the open-and-close type vent hole 10 may be provided at a tip end portion of the evagination portion 11.

In this embodiment, since the lid member for covering the open-and-close type vent hole 10 is not necessary, less number of constructional elements of the airbag 1E is required, and a reduction of a constructional cost of the airbag 1E and simplification of a manufacture work can be aimed at.

Incidentally, in this embodiment, although the open-and-close type vent hole 10 is provided only once in the evagination portion 11, two or more open-and-close type vent holes 10 may be provided. A constant open type vent hole that is not opened and closed along with a moving operation of the evagination portion 11 may be provided at a portion in the airbag 1E other than that in the evagination portion 11. In this embodiment, although the evagination portion 11 is also provided only once, two or more evagination portions 11 may be provided. In this embodiment, although the evagination portion 11 is also provided in the opposite-to-occupant side surface 1R of the airbag 1E and is configured to be evaginated toward a front side of the vehicle, the disposition and the evaginating direction of the evagination portion 11 is not limited thereto, and for example, the evagination portion 11 may be provided in a side surface of the airbag 1E and may be configured to be evaginated toward a lateral side of the airbag 1E.

Although this embodiment illustrates a constructional example where an open-and-close type vent hole is provided at an evagination portion in a passenger airbag, the construction where the open-and-close type vent hole is provided at the evagination portion in an airbag for use in a driver's seat may be formed.

For example, in the aforementioned individual embodiments, although the open-and-close type vent hole is provided one in number, the open-and-close type vent hole may be provided two in number or more.

In the aforementioned individual embodiments, a constant open type vent hole constantly allowing an inside and an outside of the airbag to communicate with each other may be provided.

In the aforementioned individual embodiments, although a lid member is configured to close an entire open-and-close type vent hole, the lid member may be configured to change an opening amount of the open-and-close type vent hole from a large opening amount to a small opening amount. For example, a construction may be made in such a way that even when the lid member is overlapped with the open-and-close type vent hole, the open-and-close type vent hole is partially protruded from the lid member, and a gas is allowed to be discharged from the protruded portion. Alternatively, the construction may be made in such a way that a hole having a smaller diameter than that of the open-and-close type vent hole is formed in the lid member at a position overlapping with the open-and-close type vent hole, and the gas is allowed to be discharged through the hole even in a state that the lid member is overlapped with the open-and-close type vent hole.

In the aforementioned individual embodiments, although each vent hole is formed to have an approximately round opening, a shape of each vent hole is not limited thereto, and a shape other than a round shape, for example, a slit shape or the like is applicable. the present invention is also applicable to various airbags and airbag apparatuses other than the above-described, for example, to an airbag and an airbag apparatus for use in a rear seat or the like of the vehicle, or the like.

## Claims

1. An airbag comprising an open-and-close type vent hole (10) and a gas discharge limitation member for limiting a gas to be discharged from the open-and-close type vent hole (10),
wherein the airbag (1) is constructed in such a way that when the airbag (1) is expanded, the gas discharge limitation member closes the open-and-close type vent hole (10) or opens the open-and-close type vent hole (10) by a small amount when an occupant is not in contact with an occupant-facing surface (1F) of the airbag (1), and when the occupant is brought into contact with the occupant-facing surface (1F) of the expanded airbag (1) and thereby the occupant-facing surface is retreated toward an opposite-to-occupant direction, the gas discharge limitation member opens the open-and-close type vent hole (10) or opens the open-and-close type vent hole (10) by a large amount and discharges the gas outside the airbag (1) from the open-and-close type vent hole (10), and
wherein the gas discharge limitation member comprises:
at least one evagination portion (11) provided in an opposite-to-occupant side surface (1R) on a side opposite to the occupant-facing surface (1F) of the airbag (1) or a side surface (1M; 1H) of the airbag (1) in a state that the airbag (1) is expanded, and capable of evaginating toward an outside from the airbag (1);
an interlocking member (12) for interlocking a moving operation of the occupant-facing surface (1F) in an occupant direction and an opposite-to-occupant direction, and a moving operation of the evagination portion (11) inwardly of the airbag (1) and outwardly of the airbag (1) when the airbag (1) is expanded, wherein the interlocking member is formed of a tether (12) for connecting the occupant-facing surface (1F) and a tip end side in the evaginating direction of the evagination portion (11);and
a lid member (14) covering the open-and-close type vent hole (10) and capable of moving by being pulled by means of the evagination portion (11) when the evagination portion (11) is evaginated outwardly of the airbag (1),
wherein the lid member (14) is constructed to close the open-and-close type vent hole (10) or open the open-and-close type vent hole (10) by a small amount until the lid member (14) is moved by being pulled by means of the evagination portion (11), and to open the open-and-close type vent hole (10) or open the open-and-close type vent hole (10) by a large amount by means of the lid member (14) being moved by being pulled by means of the evagination portion (11),
**characterized in that**
the lid member (14) is integrally constructed with the tether (12), and
a halfway portion in a longitudinal direction of the tether (12) is overlapped with the open-and-close type vent hole (10), and the halfway portion serves as the lid member (14).

2. The airbag according to Claim 1, wherein in a state that an approximately entire evagination portion (11) is evaginated outside the airbag (1), a length (D₁) in an evaginating direction of the evagination portion (11) is formed to be larger than a moving distance (D₂) where the lid member (14) moves from a position at which the lid member (14) closes the open-and-close type vent hole (10) or opens the open-and-close type vent hole (10) by a small amount, to a position at which the lid member (14) opens the open-and-close type vent hole (10) or opens the open-and-close type vent hole (10) by a large amount.

3. The airbag according to Claim 2, wherein in the state that the approximately entire evagination portion (11) is evaginated outside the airbag (1), the length (D₁) in the evaginating direction of the evagination portion (11) is formed to be larger than the moving distance (D₂) where the lid member (14) moves from the position at which the lid member (14) closes the open-and-close type vent hole (10) or opens the open-and-close type vent hole (10) by the small amount, to the position at which the lid member (14) opens the open-and-close type vent hole (10) or opens the open-and-close type vent hole (10) by the large amount by 10mm to 300mm.

4. The airbag according to any one of Claims 1 through 3, wherein on a rear end side in the moving direction of the lid member (14), an opening (15) to be overlapped with the open-and-close type vent hole (10) when the lid member (14) is moved by being pulled by means of the evagination portion (11) is provided.

5. The airbag according to Claim 4, wherein for the opening a plurality of openings (15a-c) is provided while displacing respective positions in the moving direction of the lid member (14).

6. The airbag according to any one of Claims 1 through 5, wherein the lid member (14) is combined with the airbag (1) in a state of covering the open-and-close type vent hole (10) by means of a combination member (18) in such a way that a combination thereof can be released, and the combination member (18) is constructed to release the combination of the lid member (14) and the airbag (1) when the lid member (14) is pulled by the evagination portion (11) with predetermined tension force or more.

7. An airbag apparatus comprising the airbag according to any one of Claims 1 through 6, and an inflator (3) for expanding the airbag (1).

## Patentansprüche

1. Airbag, umfassend ein Luftloch (10) eines zu öffnenden bzw. verschließenden Typs und ein Gasdurchflussbegrenzungsteil, um ein von dem Luftloch (10) des zu öffnenden bzw. verschließenden Typs ausströmendes Gas zu begrenzen,
wobei der Airbag (1) in solch einer Weise konstruiert ist, dass, wenn sich der Airbag (1) ausdehnt, das Gasdurchflussbegrenzungsteil das Luftloch (10) des zu öffnenden bzw. verschließenden Typs verschließt oder das Luftloch (10) des zu öffnenden bzw. verschließenden Typs zu einem geringen Umfang öffnet, wenn sich kein Insasse in Kontakt mit einer dem Insassen zugewandten Oberfläche (1 F) des Airbags (1) befindet, und wenn der Insasse in einem Kontakt mit der dem Insassen zugewandten Oberfläche (1 F) des ausgedehnten Airbags (1) gebracht wird und **dadurch** die dem Insassen zugewandte Oberfläche in eine dem Insassen abgewandte Richtung zurückgezogen wird, das Gasdurchflussbegrenzungsteil das Luftloch (10) des zu öffnenden bzw. verschließenden Typs öffnet oder das Luftloch (10) des zu öffnenden bzw. verschließenden Typs zu einem großen Umfang öffnet und das Gas von dem Luftloch (10) des zu öffnenden bzw. zu verschließenden Typs nach außen strömt, und
wobei das Gasdurchflussbegrenzungsteil umfasst:
zumindest einen Ausstülpungsabschnitt (11), welcher in einer dem Insassen abgewandten Seitenoberfläche (1R) auf einer Seite, welche der dem Insassen zugewandten Oberfläche (1 F) des Airbags (1) abgewandt ist, oder einer Seitenoberfläche (1 M; 1H) des Airbags (1) in einem Zustand, in welchem der Airbag (1) ausgedehnt ist, vorhanden ist, und in der Lage ist, sich von dem Airbag (1) nach außen zu stülpen;
ein Blockierungsteil (12), um einen Bewegungsvorgang der dem Insassen zugewandten Oberfläche (1 F) in einer zu dem Insassen hin gerichteten Richtung und
einer von dem Insassen weg gerichteten Richtung zu blockieren und einen Bewegungsvorgang des Ausstülpungsabschnitts (11) in den Airbag (1) hinein und aus dem Airbag (1) hinaus zu blockieren, wenn der Airbag (1) ausgedehnt wird, wobei das Blockierungsteil aus einem Haltegurt (12) ausgebildet ist, um die dem Insassen zugewandte Oberfläche (1 F) und eine obere Endseite in der Ausstülpungsrichtung des Ausstülpungsabschnitts (11) zu verbinden; und
ein Deckelteil (14), welches das Luftloch (10) des zu öffnenden bzw. verschließenden Typs überdeckt und in der Lage ist, bewegt zu werden, indem es von dem Ausstülpungsabschnitt (11) gezogen wird, wenn sich der Ausstülpungsabschnitt (11) von dem Airbag (1) nach außen stülpt,
wobei das Deckelteil (14) derart ausgestaltet ist, dass es das Luftloch (10) des zu öffnenden bzw. verschließenden Typs verschließt oder das Luftloch (10) des zu öffnenden bzw. zu verschließenden Typs zu einem geringen Umfang öffnet, bis das Deckelteil (14) bewegt wird, indem es mittels des Ausstülpungsabschnitts (11) gezogen wird, und dass es das Luftloch (10) des zu öffnenden bzw. verschließenden Typs öffnet oder das Luftloch (10) des zu öffnenden bzw. verschließenden Typs zu einem großen Umfang öffnet, indem das Deckelteil (14) bewegt wird, indem es mittels des Ausstülpungsabschnitts (11) gezogen wird,
**dadurch gekennzeichnet,**
**dass** das Deckelteil (14) ganzheitlich mit dem Haltegurt (12) konstruiert ist, und dass ein halber Abschnitt in einer Längsrichtung des Haltegurts (12) das Luftloch (10) des zu öffnenden bzw. verschließenden Typs überlappt und dass der halbe Abschnitt als das Deckelteil (14) dient.

2. Airbag nach Anspruch 1, **dadurch gekennzeichnet, dass** in einem Zustand, in welchem näherungsweise der gesamte Ausstülpungsabschnitt (11) von dem Airbag (1) nach außen gestülpt ist, eine Länge (D₁) in einer Ausstülpungsrichtung des Ausstülpungsabschnitts (11) größer als eine Bewegungsstrecke (D₂) ausgebildet ist, entlang welcher sich das Deckelteil (14) von einer Position, an welcher das Deckelteil (14) das Luftloch (10) des zu öffnenden bzw. verschließenden Typs verschließt oder das Luftloch (10) des zu öffnenden bzw. verschließenden Typs zu einem geringen Umfang öffnet, zu einer Position, an welcher das Deckelteil (14) das Luftloch (10) des zu öffnenden bzw. verschließenden Teils öffnet oder das Luftloch (10) des zu öffnenden bzw. verschließenden Teils zu einem großen Umfang öffnet, bewegt.

3. Airbag nach Anspruch 2, **dadurch gekennzeichnet, dass** in einem Zustand, in welchem näherungsweise der gesamte Ausstülpungsabschnitt (11) von dem Airbag (1) nach außen gestülpt ist, die Länge (D₁) in der Ausstülpungsrichtung des Ausstülpungsabschnitts (11) größer als die Bewegungsstrecke (D₂) ausgebildet ist, entlang welcher sich das Deckelteil (14) von der Position, an welcher das Deckelteil (14) das Luftloch (10) des zu öffnenden bzw. verschließenden Typs verschließt oder das Luftloch (10) des zu öffnenden bzw. verschließenden Typs zu dem geringen Umfang öffnet, zu der Position, an welcher das Deckelteil (14) das Luftloch (10) des zu öffnenden bzw. verschließenden Teils öffnet oder das Luftloch (10) des zu öffnenden bzw. verschließenden Teils zu dem großen Umfang von 10 mm bis 300 mm öffnet, bewegt.

4. Airbag nach einem der Ansprüche 1 bis 3, **dadurch gekennzeichnet, dass** auf einer rückwärtigen Endseite in der Bewegungsrichtung des Deckelteils (14) eine Öffnung (15) vorhanden ist, welche mit dem Luftloch (10) des zu öffnenden bzw. verschließenden Typs überlappt, wenn das Deckelteil (14) bewegt wird, indem mittels des Ausstülpungsabschnitts (11) gezogen wird.

5. Airbag nach Anspruch 4, **dadurch gekennzeichnet, dass** für das Öffnen eine Mehrzahl von Öffnungen (15a-c) vorhanden ist während entsprechende Positionen in der Bewegungsrichtung des Deckelteils (14) verschoben werden.

6. Airbag nach einem der Ansprüche 1 bis 5, **dadurch gekennzeichnet, dass** das Deckelteil (14) mit dem Airbag (10) in einem Zustand eines Abdeckens des Luftlochs (10) des zu öffnenden bzw. verschließenden Typs mittels eines Verbindungsteils (18) in solch einer Weise verbunden ist, dass eine Verbindung davon gelöst werden kann, und dass das Verbindungsteil (18) derart ausgestaltet ist, dass es die Verbindung des Deckelteils (14) und des Airbags (1) löst, wenn das Deckelteil (14) mit einer vorbestimmten Zugkraft oder mehr durch den Ausstülpungsabschnitt (11) gezogen wird.

7. Airbag-Vorrichtung umfassend den Airbag nach einem der Ansprüche 1 bis 6 und eine Aufblasvorrichtung (3) zum Aufblasen des Airbags (1).

## Revendications

1. Coussin gonflable de sécurité, comprenant un trou d'évent (10), de type à ouverture et fermeture, et un organe de limitation de décharge de gaz, pour limiter la décharge d'un gaz partir du trou d'évent (10) de type à ouverture et fermeture,
dans lequel le coussin gonflable de sécurité (1) est construit de telle manière que, lorsque le coussin gonflable de sécurité (1) est dilaté, l'organe de limitation de décharge de gaz ferme le trou d'évent (10) de type à ouverture et fermeture ou ouvre le trou d'évent (10) de type à ouverture et fermeture à un faible degré lorsqu'un occupant n'est pas en contact avec une surface située face à l'occupant (IF) du coussin gonflable de sécurité (1) et, lorsque l'occupant est mis en contact avec la surface située face à l'occupant (IF) du coussin gonflable de sécurité (1) dilaté et que, de cette manière, la surface située face à l'occupant est rétractée dans un sens opposé à l'occupant, l'organe de limitation de décharge de gaz ouvre le trou d'évent (10) de type à ouverture et fermeture ou ouvre le trou d'évent (10) de type à ouverture et fermeture à un fort degré et décharge le gaz à l'extérieur du coussin gonflable de sécurité (1), à partir du trou d'évent (10) de type à ouverture et fermeture, et
dans lequel l'organe de limitation de décharge de gaz comprend :
au moins une partie d'évagination (11) prévue dans une surface latérale opposée à l'occupant (1 R), sur un côté opposé à la surface située face à l'occupant (IF) du coussin gonflable de sécurité (1), ou une surface latérale (1M ; 1H) du coussin gonflable de sécurité (1) en un état tel que la coussin gonflable de sécurité (1) soit gonflé, et capable d'évagination vers l'extérieur du coussin gonflable de sécurité (1) ;
un organe de verrouillage réciproque (12), pour verrouiller réciproquement une opération de déplacement de la surface située face à l'occupant (IF) dans un sens vers l'occupant et un sens opposé à l'occupant, et une opération de déplacement de la partie d'évagination (11) à l'intérieur du coussin gonflable de sécurité (1) et à l'extérieur du coussin gonflable de sécurité (1), lorsque le coussin gonflable de sécurité (1) est gonflé, dans lequel l'organe de verrouillage réciproque est formé d'une amarre (12) pour connecter la surface située face à l'occupant (IF) et un côté d'extrémité de bout dans la direction d'évagination de la partie d'évagination (11) ; et
un organe formant couvercle (14), couvrant le trou d'évent (10) de type à ouverture et fermeture et capable de déplacement par le fait d'être tiré au moyen de la partie d'évagination (11), lorsque la partie d'évagination (11) est évaginée à l'extérieur du coussin gonflable de sécurité (1),
dan lequel l'organe formant couvercle (14) est construit pour fermer le trou d'évent (10) de type à ouverture et fermeture ou ouvrir le trou d'évent (10) de type à ouverture et fermeture à un faible degré, jusqu'à ce que l'organe formant couvercle (14) soit déplacé par le fait d'être tiré au moyen de la partie d'évagination (11), et pour ouvrir le trou d'évent (10) de type à ouverture et fermeture ou ouvrir le trou d'évent (10) de type à ouverture et fermeture à un fort degré, au moyen de l'organe formant couvercle (14) déplacé par le fait d'être tiré au moyen de la partie d'évagination (11),
**caractérisé en ce que**
l'organe formant couvercle (14) est constitué d'une seule pièce avec l'amarre (12), et
une partie à mi-chemin, en direction longitudinale, de l'amarre (12) est chevauchée par le trou d'évent (10) de type à ouverture et fermeture, et la partie à mi-chemin sert d'organe formant couvercle (14).

2. Coussin gonflable de sécurité selon la revendication 1, dans lequel, dans un état dans lequel une partie d'évagination (11) à peu près entière est évaginée à l'extérieur du coussin gonflable de sécurité (1), une longueur (D₁) dans une direction d'évagination de la partie d'évagination (11) est formée pour être plus grande qu'une distance de déplacement (D₂) de la valeur de laquelle l'organe formant couvercle (14) se déplace d'une position à laquelle l'organe formant couvercle (14) ferme le trou d'évent (10) de type à ouverture et fermeture ou ouvre le trou d'évent (10) de type à ouverture et fermeture à un faible degré, à une position à laquelle l'organe formant couvercle (14) ouvre le trou d'évent (10) de type à ouverture et fermeture ou ouvre le trou d'évent (10) de type à ouverture et fermeture à un fort degré.

3. Coussin gonflable de sécurité selon la revendication 2, dans lequel, dans l'état dans lequel une partie d'évagination (11) à peu près entière est évaginée à l'extérieur du coussin gonflable de sécurité (1), la longueur (D₁) dans la direction d'évagination de la partie d'évagination (11) est formée pour être plus grande qu'une distance de déplacement (D₂) de la valeur de laquelle l'organe formant couvercle (14) se déplace de la position à laquelle l'organe formant couvercle (14) ferme le trou d'évent (10) de type à ouverture et fermeture ou ouvre le trou d'évent (10) de type à ouverture et fermeture au faible degré, à la position à laquelle l'organe formant couvercle (14) ouvre le trou d'évent (10) de type à ouverture et fermeture ou ouvre le trou d'évent (10) de type à ouverture et fermeture au fort degré, de 10 mm à 300 mm.

4. Coussin gonflable de sécurité selon l'une quelconque des revendications 1 à 3, dans lequel, sur un côté d'extrémité arrière dans le sens de déplacement de l'organe formant couvercle (14), est prévue une ouverture (15), devant être placée en chevauchement avec le trou d'évent (10) de type à ouverture et fermeture lorsque l'organe formant couvercle (14) est déplacé par le fait d'être tiré au moyen de la partie d'évagination (11).

5. Coussin gonflable de sécurité selon la revendication 4, dans lequel, pour constituer l'ouverture sont prévues une pluralité d'ouvertures (15a à c), intervenant au fur et à mesure du déplacement à des positions respectives dans le sens de déplacement de l'organe formant couvercle (14).

6. Coussin gonflable de sécurité selon l'une quelconque des revendications 1 à 5, dans lequel l'organe formant couvercle (14) est combiné au coussin gonflable de sécurité (1), en un état de couverture du trou d'évent (10) de type à ouverture et fermeture, au moyen d'un organe à combinaison (18), de manière qu'une combinaison de celui-ci puisse être déclenchée, et l'organe à combinaison (18) est conçu pour libérer la combinaison de l'organe formant couvercle (14) et du coussin gonflable de sécurité (1) lorsque l'organe formant couvercle (14) est tiré par la partie d'évagination (11), avec une force prédéterminée ou de valeur supérieure.

7. Dispositif formant coussin gonflable de sécurité, comprenant le coussin gonflable de sécurité selon l'une quelconque des revendications 1 à 6, et un gonfleur (3) pour gonfler le coussin gonflable de sécurité (1).
